# EUROPEAN PATENT APPLICATION

(11) **EP 4 793 678 A1**
(43) Date of publication of application: **19.08.2026**
(21) Application number: 24877184.2
(22) Date of filing: 09.10.2024
(51) Int. Cl.: G02B 5/23, C09K 9/02, G02C 7/10

(54) **CURABLE COMPOSITION, CURED BODY, LAMINATE, OPTICAL ARTICLE, LENS, GLASSES, AND PHOTOCHROMIC OPTICAL ARTICLE**

(30) Priority: 11.10.2023 JP 2023175807; 11.10.2023 JP 2023175808
(71) Applicant: TOKUYAMA CORPORATION, Yamaguchi 745-8648 (JP)
(72) Inventor: HIRAREN, Toshimitsu, Shunan-shi, Yamaguchi 745-8648 (JP); MIYAZAKI, Masayuki, Shunan-shi, Yamaguchi 745-8648 (JP)
(74) Representative: Kraus & Lederer PartGmbB
(86) International application number: PCT/JP2024/036055
(87) International publication number: WO 2025/079589

(57) **Abstract**

The present invention provides a curable composition with which it is possible to attain a cured body exhibiting excellent functional pigment performance and appearance, and also provides a cured body, a laminate, a lens, glasses, and a photochromic optical article. An embodiment of the present invention provides a curable composition. The curable composition includes a functional pigment, a first (meth)acrylate, and a second (meth)acrylate. The first (meth)acrylate has a number-average molecular weight of 850 to 3,000, and has three or more (meth)acryloyl groups. The second (meth)acrylate has a number-average molecular weight of 850 or more, and has two (meth)acryloyl groups.

## Description

### TECHNICAL FIELD

The present invention relates to a curable composition, a cured body, a laminate, an optical article, a lens, glasses, and a photochromic optical article.

### BACKGROUND ART

Photochromic compounds typified by a naphthopyran compound, a fulgide compound, and a spirooxazine compound, are compounds capable of reversibly taking two isomers with different absorption spectra by irradiation with light including ultraviolet rays such as sunlight or light from a mercury lamp. Photochromic compounds have properties that when a colorless decolorized compound is irradiated with ultraviolet rays, the compound is isomerized to a colored color-development state, and when the irradiation with light is stopped and the compound is put in the dark, the compound returns to its original color. By virtue of this property, the photochromic compounds are used in various applications, particularly as optical materials. For example, photochromic spectacle lenses provided with the photochromic properties by using a photochromic compound function as sunglasses that are quickly colored outdoors irradiated with light including ultraviolet rays such as sunlight, and function as ordinary transparent glasses fading indoors not irradiated with such light. In recent years, demand of photochromic spectacle lenses has been increasing. The photochromic spectacle lens can be obtained, for example, by applying a photochromic curable composition to a plastic lens by spin coating or the like, and then photocuring the composition to form a photochromic coating layer.

### Citation List

### Patent Documents

Patent Document 1: Japanese Unexamined Patent Application, Publication No. H10-338869
Patent Document 2: Japanese Unexamined Patent Application, Publication No. 2015-025063
Patent Document 3: Japanese Unexamined Patent Application, Publication No. 2017-052869
Patent Document 4: PCT International Publication No. WO2009/075388
Patent Document 5: PCT International Publication No. WO2021/241596

### DISCLOSURE OF THE INVENTION

### Problems to be Solved by the Invention

An object of the present invention is to provide a curable composition capable of producing a cured body with excellent functional dye performance and appearance, and also to provide a cured body, a laminate, an optical article, a lens, glasses, and a photochromic optical article.

### Means for Solving the Problems

The present disclosure provides a curable composition. The curable composition includes a functional dye, a first (meth)acrylate, and a second (meth)acrylate. The first (meth)acrylate has a number average molecular weight of 850 or more and 3000 or less, and has three or more (meth)acryloyl groups. The second (meth)acrylate has a number average molecular weight of 850 or more, and has two (meth)acryloyl groups.

The present disclosure provides a cured body. The cured body is obtained by curing the curable composition according to an embodiment.

The present disclosure provides a laminate. The laminate includes an optical base material and a resin layer including the cured body according to the embodiment.

The present disclosure provides a laminate. The laminate includes a resin layer including an optical base material, a primer layer including a urethane resin, and the cured body according to the embodiment laminated on the primer layer.

The present disclosure provides an optical article. The optical article includes the cured body according to the embodiment.

The present disclosure provides a lens. The lens includes a lens base material and the cured body according to the embodiment located on a surface of the optical base material.

The present disclosure provides glasses. The glasses include the lenses according to the embodiment.

The present disclosure provides a photochromic optical article. In measurement by a method in accordance with Japanese Industrial Standard T7333, the photochromic optical article has a luminous transmittance of 12% or less at the time of color development in an atmosphere at 23°C, a difference in luminous transmittance between 23°C and 35°C at the time of color development is within 12%, and a time to reach a luminous transmittance of 70% at the time of fading is within 400 seconds.

### Effects of the Invention

The present invention provides a curable composition capable of producing a cured body with excellent functional dye performance and appearance, and also provides a cured body, a laminate, an optical article, a lens, glasses, and a photochromic optical article.

### BRIEF DESCRIPTION OF THE DRAWINGS

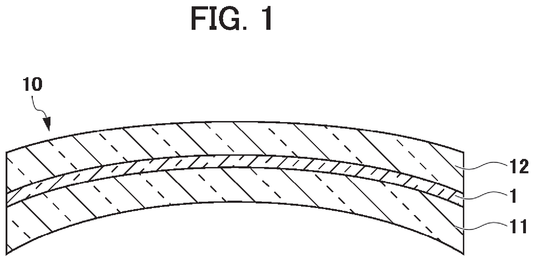

FIG. 1 is a sectional view schematically showing an example of a laminate according to an embodiment.

### PREFERRED MODE FOR CARRYING OUT THE INVENTION

The curable composition according to the embodiment includes a functional dye, a first (meth)acrylate, and a second (meth)acrylate. The first (meth)acrylate has a number average molecular weight of 850 or more and 3000 or less, and has three or more (meth)acryloyl groups. The second (meth)acrylate has a number average molecular weight of 850 or more, and has two (meth)acryloyl groups. Herein, the (meth)acryloyl group means at least one of an acryloyl group and a methacryloyl group. The (meth)acrylate means a compound having at least one of an acryloyl group and a methacryloyl group. When such a curable composition is used, a cured body having excellent functional dye performance and appearance can be achieved. The reason for this has not been clearly elucidated, but the present inventors consider the reason as follows.

Firstly, functional dyes such as photochromic compounds include compounds that undergo a structural change due to energy such as light, and develop color, decolor, or discolor. In order for such functional dyes to easily undergo a structural change in the high molecular solid matrix, it is important that the high molecular solid matrix includes sufficient soft segments. The second (meth)acrylate has a relatively high number average molecular weight and therefore is considered to contribute to the formation of this soft segment. However, when the proportion of di(meth)acrylate increases, the number of crosslinking points decreases, and therefore, the curability of the high molecular solid matrix may decrease. When the curability decreases, the appearance of a cured body obtained by curing the curable composition may decrease. In other words, when the curable composition is applied to a base material by spin coating or the like, a liquid pool with a thick coating film may be formed on the periphery of the base material. When a base material having a central part with a relatively thin coating film and a peripheral part located around the central part and in which a liquid pool is formed is cured, the coating film may not be cured sufficiently in the peripheral portion in which the liquid pool is formed, and wrinkled defective appearance may be generated in the cured body. In the curable composition according to the embodiment, a first (meth)acrylate having a relatively high number average molecular weight and a functionality of three or more is blended. Therefore, a high molecular solid matrix with high crosslink density can be formed in which formation of soft segments is not prevented. Therefore, in the cured body obtained by curing this curable composition, the functional dye performance can be sufficiently exhibited, and less appearance defects can be achieved.

Hereinafter, the curable composition according to the embodiment will be described in detail.

### <First (meth)acrylate>

The first (meth)acrylate has a number average molecular weight of 850 or more and 3000 or less, and has three or more (meth)acryloyl groups. The number of the (meth)acryloyl groups may be 3, 4, 5, 6, 7, or 8. The number average molecular weight of the first (meth)acrylate can be measured, for example, by gel permeation chromatography (GPC). In terms of enhancing the functionality of the cured body, the number average molecular weight of the first (meth)acrylate is preferably 950 or more, more preferably 1000 or more, and further preferably 1100 or more. On the other hand, when the number average molecular weight of the first (meth)acrylate is excessively high, the fluidity of the first (meth)acrylate may decrease, and the handling and coating properties may decrease. From this point, the number average molecular weight of the first (meth)acrylate is preferably 2500 or less, more preferably 2000 or less, and further preferably 1500 or less.

The proportion of the first (meth)acrylate occupied in the curable composition is preferably 20% by mass or more, more preferably 25% by mass or more, and further preferably 35% by mass or more in terms of enhancing the appearance of the cured body. The proportion of the first (meth)acrylate is preferably 60% by mass or less, more preferably 55% by mass or less, and further preferably 50% by mass or less in terms of enhancing the functionality of the cured body. This proportion can be determined, for example, by measuring the mass of the first (meth)acrylate separated by silica gel column chromatography.

The first (meth)acrylate preferably has 1 or more methacryloyl groups, more preferably has 2 or more methacryloyl groups, and further preferably has 3 or more methacryloyl groups. When methacryloyl groups are included, deterioration of the functional dye can be suppressed, and the appearance of the cured body tends to be improved.

The first (meth)acrylate preferably includes an alkylene oxide chain. When such a first (meth)acrylate is used, the functionality of the cured body tends to be enhanced. The number of carbon atoms in the alkylene oxide chain is, for example, 1 or more and 10 or less, and preferably 2 or more and 4 or less.

Raw materials of the first (meth)acrylate may be compounds derived from a biological resource or compounds derived from a fossil resource. The first (meth)acrylate including an alkylene oxide chain can be obtained, for example, by using a polyol compound derived from a plant.

The first (meth)acrylate is preferably an acyclic (meth)acrylate that does not include a cyclic structure such as an aromatic ring or an aliphatic ring. When such a first (meth)acrylate is used, the functionality of the cured body tends to be enhanced.

The first (meth)acrylate may include at least one kind of structure selected from the group consisting of an ester bond, a urethane bond, a urea bond, and a carbonyl group. It is preferable that the first (meth)acrylate does not include any of the structures of an ester bond, a urethane bond, a urea bond, and a carbonyl group.

The first (meth)acrylate preferably includes a trifunctional to hexafunctional (meth)acrylate represented by the following formula (I).

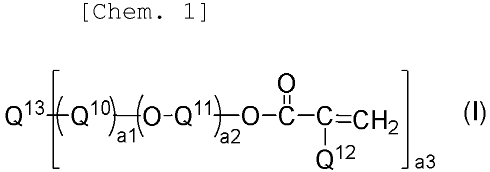

In the formula (I), Q¹⁰ is a linear or branched alkylene group having 1 or more and 3 or less carbon atoms. Q¹⁰ is preferably a methylene group.
a1 is 0 or 1.

Q¹¹ is a linear or branched alkylene group having 1 or more and 10 or less carbon atoms. Q1¹ is preferably a linear alkylene group. Q1¹ is preferably an alkylene group having 2 or more and 5 or less carbon atoms. Q1¹ is more preferably an ethylene group, an n-propylene group, or an n-butylene group.

a2 is a number of 3 or more and 15 or less.
a2 is preferably 5 or more and 10 or less.

Q¹² is a hydrogen atom or a methyl group. Q1² is preferably a methyl group.

Q¹³ is a trivalent to hexavalent organic group having 1 or more and 10 or less carbon atoms. Examples of the organic group represented by Q¹³ include a group derived from a polyol, a trivalent to hexavalent hydrocarbon group, and an organic group including a trivalent to hexavalent urethane bond. Q1³ is preferably a tetravalent hydrocarbon group or a hexavalent hydrocarbon group. Q1³ may be a group derived from trimethylolpropane, a group derived from glycerin, a group derived from pentaerythritol, a group derived from ditrimethylolpropane, or a group derived from dipentaerythritol.

a3 is 3, 4, 5, or 6.
a3 is preferably 3 or 4.

It is more preferable that the first (meth)acrylate includes a trifunctional to tetrafunctional (meth)acrylate represented by the following formula (II).

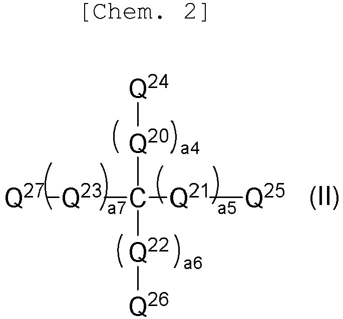

In the formula (II), Q²⁰, Q²¹, Q²² and Q²³ are each independently an alkylene group having 1 or more and 3 or less carbon atoms. Q²⁰, Q²¹, Q²² and Q²³ are preferably a methylene group.
a4, a5, a6 and a7 are each independently 0 or 1.

Q²⁴, Q²⁵, and Q²⁶ are each independently a monovalent group represented by the following formula (III).

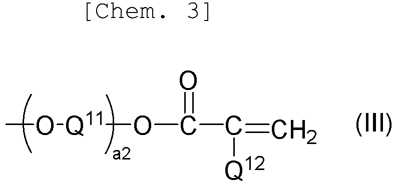

In the formula (III), Q¹¹, Q¹² and a2 are the same as those in the formula (I).

Q²⁴, Q²⁵, and Q²⁶ may have different structures or the same structure. Q²⁴, Q²⁵, and Q²⁶ preferably have the same structure.

Q²⁷ is a hydrogen atom, a linear or branched alkyl group having 1 or more and 5 or less carbon atoms, a linear or branched alkoxy group having 1 or more and 5 or less carbon atoms, or a monovalent group represented by the formula (III). Q²⁷ is preferably a hydrogen atom, a linear alkyl group having 1 or more and 33 or less carbon atoms, or a monovalent group represented by the formula (III).

Specific examples of the polyfunctional (meth)acrylate represented by the above formula (I) include at least one selected from the group consisting of alkoxylated trimethylolpropane tri(meth)acrylate, alkoxylated glycerin tri(meth)acrylate, alkoxylated pentaerythritol tetra(meth)acrylate, alkoxylated ditrimethylolpropane (meth)acrylate, and alkoxylated dipentaerythritol (meth)acrylate.

The alkoxylated trimethylolpropane tri(meth)acrylate includes at least one selected from the group consisting of ethoxylated trimethylolpropane trimethacrylate, propoxylated trimethylolpropane trimethacrylate, butoxylated trimethylolpropane trimethacrylate, ethoxylated trimethylolpropane triacrylate, propoxylated trimethylolpropane triacrylate, and butoxylated trimethylolpropane triacrylate.

The alkoxylated glycerin tri(meth)acrylate includes at least one selected from the group consisting of ethoxylated glycerin trimethacrylate, propoxylated glycerin trimethacrylate, butoxylated glycerin trimethacrylate, ethoxylated glycerin triacrylate, propoxylated glycerin triacrylate, and butoxylated glycerin triacrylate.

The alkoxylated pentaerythritol tetra(meth)acrylate includes at least one selected from the group consisting of ethoxylated pentaerythritol tetramethacrylate, propoxylated pentaerythritol tetramethacrylate, butoxylated pentaerythritol tetramethacrylate, ethoxylated pentaerythritol tetraacrylate, propoxylated pentaerythritol tetraacrylate, and butoxylated pentaerythritol tetraacrylate.

The polyfunctional (meth)acrylate represented by the formula (I) preferably includes at least one selected from the group consisting of ethoxylated trimethylolpropane tri(meth)acrylate, ethoxylated glycerin tri(meth)acrylate, and ethoxylated pentaerythritol tetra(meth)acrylate.

The first (meth)acrylate may include a polyfunctional (meth)acrylate having a urethane bond. The polyfunctional (meth)acrylate having a urethane bond is obtained by reacting a polyol compound having three or more hydroxyl groups in the molecule with a (meth)acrylate having one isocyanate group in the molecule. Alternatively, the polyfunctional (meth)acrylate having a urethane bond can be obtained by reacting a polyol compound having a urethane bond and 3 or more hydroxyl groups in the molecule with a (meth)acrylate. The polyfunctional (meth)acrylate having a urethane bond preferably has 4 or more (meth)acryloyl groups in the molecule. Examples include commercially available products U-6HA (molecular weight is 1019, manufactured by Shin-Nakamura Chemical Co., Ltd., the number of functional groups is 6) and U-15HA (molecular weight is 2300, manufactured by Shin-Nakamura Chemical Co., Ltd., the number of functional groups is 15).

The first (meth)acrylate may include a polyester(meth)acrylate compound obtained by modifying the end of a polyester compound with a (meth)acryloyl group. As the polyester (meth)acrylate compound, various polyester (meth)acrylate compounds having different molecular weights of polyester compound as a raw material and different amounts of modification of the (meth)acryloyl group are commercially available, and can be used. Specific examples thereof include tetrafunctional polyester oligomers (molecular weight: 2500 to 3500, Daicel-Allnex Ltd., EB80 and the like), hexafunctional polyester oligomers (molecular weight 6000 to 8000, Daicel-Allnex Ltd., EB450 and the like), hexafunctional polyester oligomers (molecular weight: 45000 to 55000, Daicel-Allnex Ltd., EB1830 and the like), and tetrafunctional polyester oligomers (particularly those having a molecular weight of 10000, DKS, GX8488B and the like), and the like.

### <Second (meth)acrylate>

The second (meth)acrylate has a number average molecular weight of 850 or more and is a di(meth)acrylate having two (meth)acryloyl groups. The number average molecular weight of the second (meth)acrylate can be measured, for example, by gel permeation chromatography (GPC). In terms of enhancing the functionality of the cured body, the number average molecular weight of the second (meth)acrylate is preferably 950 or more, more preferably 1000 or more, and further preferably 1100 or more. On the other hand, when the number average molecular weight of the second (meth)acrylate is excessively high, the second (meth)acrylate may be reduced in fluidity, and solidified, or the handling and coating properties may reduce. In terms of this point, the number average molecular weight of the second (meth)acrylate is preferably 3000 or less, more preferably 2500 or less, and further preferably 2000 or less.

The proportion of the second (meth)acrylate in the curable composition is preferably 15% by mass or more, more preferably 25% by mass or more, and further preferably 35% by mass or more, in terms of enhancing the functionality of the cured body. The proportion of the second (meth)acrylate is preferably 75% by mass or less, more preferably 65% by mass or less, and further preferably 55% by mass or less in terms of enhancing the appearance of the cured body. This proportion can be determined, for example, by measuring the mass of the second (meth)acrylate separated by silica gel column chromatography.

The ratio M1/M2 of the mass M1 of the first (meth)acrylate to the mass M2 of the second (meth)acrylate is, for example, 0.1 or more and 2.0 or less. In terms of enhancing the appearance of the cured body, the ratio M1/M2 is preferably 0.25 or more, more preferably 0.30 or more, further preferably 0.40 or more, and particularly preferably 0.65 or more. In terms of enhancing the functionality of the cured body, the ratio M1/M2 is preferably 1.7 or less, more preferably 1.50 or less, further preferably 1.20 or less, and particularly preferably 1.00 or less.

The second (meth)acrylate preferably has one or more methacryloyl groups, and more preferably has two methacryloyl groups. When methacryloyl groups are included, deterioration of the functional dye is suppressed, and the appearance of the cured body tends to be enhanced.

The second (meth)acrylate preferably includes an alkylene oxide chain. When such a second (meth)acrylate is used, the functionality of the cured body tends to be enhanced. The number of carbon atoms in the alkylene oxide chain is, for example, 1 or more and 10 or less, and preferably 2 or more and 4 or less.

The raw material of the second (meth)acrylate may be a compound derived from a biological resource or a compound derived from a fossil resource. The second (meth)acrylate including an alkylene oxide chain is obtained, for example, from a plant-derived polyol compound. The biomass content of the second (meth)acrylate is preferably 60% by mass or more, more preferably 70% by mass or more, and further preferably 90% by mass or more. The upper limit of the biomass content is, for example, 100% by mass or less, or 98% by mass or less.

The second (meth)acrylate is preferably an acyclic (meth)acrylate that does not include a cyclic structure such as an aromatic ring or an aliphatic ring. When such a second (meth)acrylate is used, the functionality of the cured body tends to be enhanced.

The second (meth)acrylate may include at least one structure selected from the group consisting of an ester bond, a urethane bond, a urea bond, and a carbonyl group. It is preferable that the second (meth)acrylate does not include any of the structures of an ester bond, a urethane bond, a urea bond, and a carbonyl group.

The second (meth)acrylate preferably includes a di(meth)acrylate represented by the following formula (1).

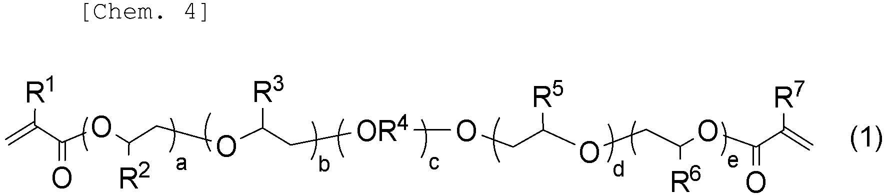

In the formula (1), R¹ and R⁷ are each independently a hydrogen atom or a methyl group. In other words, the compound represented by the formula (1) may be a diacrylate, a dimethacrylate, or a methacrylate acrylate. R¹ and R⁷ are preferably a methyl group.

R⁴ is a linear or branched alkylene group having 3 or more and 10 or less carbon atoms, which may have a substituent.
c is 2 to 100.
c is a number larger than a, a number larger than b, a number larger than d, and a number larger than e.

In other words, the repeating unit -(OR⁴)- to which a subscript c located is a first alkylene oxide unit. The polymer moiety including this repeating unit can form a soft segment of the cured body. R⁴ is preferably a linear alkylene group. The number of carbon atoms in the alkylene group is preferably 3 or more and 6 or less, and more preferably 4 or more and 5 or less. When the number of carbon atoms in the alkylene group is large, the functionality of the cured body is further enhanced. On the other hand, when the number of carbon atoms in the alkylene group is too large, the amount of soft segments per unit mass decreases, and the functionality of the cured body may decrease.

From the viewpoint of achieving both functionality and hardness, c is preferably 5 to 85, more preferably 7 to 70, further preferably 10 to 50, and particularly preferably 13 to 20.

R², R³, R⁵, and R⁶ are each independently a hydrogen atom or an alkyl group having 1 to 3 carbon atoms. It is preferable that R², R³, R⁵, and R⁶ are each independently a hydrogen atom or a methyl group. R² and R³ are groups different from each other. R⁵ and R⁶ are groups different from each other. R² and R⁶ may be the same group. R³ and R⁵ may be the same group.

a and e are each independently 0 to 10. From the viewpoint of achieving both functionality and hardness, a and e are preferably 0 to 5, more preferably 0 to 2, further preferably 0 or 1, and most preferably 0.

b and d are each independently a number of 0 to 20. From the viewpoint of achieving both functionality and hardness, b and d are preferably 0 to 15, more preferably 0 to 10, further preferably 0 to 5, and most preferably 0.

In other words, the di(meth)acrylate represented by the formula (1) may be a monomer further including at least one of a second alkylene oxide unit, which is a repeating unit with subscripts b and d located, and a third alkylene oxide unit, which is a repeating unit with subscripts a and e located.

The di(meth)acrylate represented by the formula (1) preferably has a, b, d, and e each being 0, i.e., includes only first alkylene oxide units. When such a di(meth)acrylate represented by the formula (1) is used, the hardness of the cured body tends to be enhanced.
c may be 4 or more and 20 or less, or 6 or more and 15 or less.

Such a compound is represented by, for example, the following formula (3).

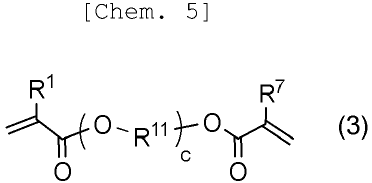

In the above formula (3), R¹, R⁷, and c are the same as those in the formula (1).

R¹¹ is a linear alkylene group having 1 to 10 carbon atoms. R1¹ is preferably a linear alkylene group having 2 to 7 carbon atoms, more preferably a linear alkylene group having 3 to 5 carbon atoms, and most preferably a linear alkylene group having 4 carbon atoms.

Specific examples of compounds represented by the above formula (3) include polytrimethylene glycol di(meth)acrylate, polytetramethylene glycol di(meth)acrylate, polypentamethylene glycol di(meth)acrylate, polyhexamethylene glycol di(meth)acrylate, and the like.

By using the di(meth)acrylate represented by the formula (1) in which a and e are 0, and b and d are 1 or more, that is, the di(meth)acrylate represented by the formula (1) further including a second alkylene oxide unit, a cured body with high functionality of the functional dye tends to be obtained.
b and d may be 2 or more and 15 or less, or may be 4 or more and 10 or less.

Specific examples of the di(meth)acrylates represented by the formula (1) are as follows.

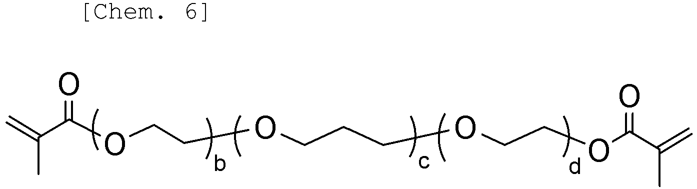

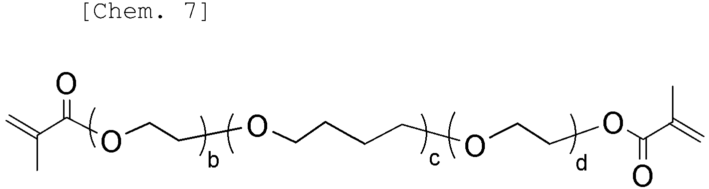

Furthermore, the di(meth)acrylate represented by the formula (1) may be a monomer in which a, b, d, and e are 1 or more, that is, a monomer further including both the second alkylene oxide unit and the third alkylene oxide unit. In this case, the second alkylene oxide unit and the third alkylene oxide unit have structures different from each other.

Specific examples of di(meth)acrylates represented by the formula (1) are as follows.

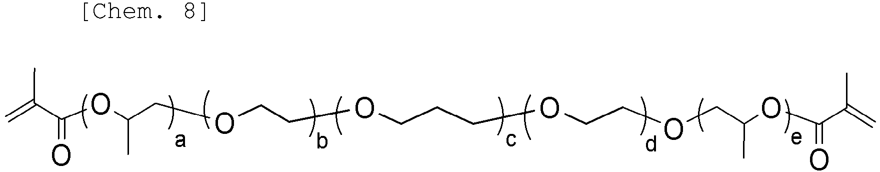

The di(meth)acrylate represented by the formula (1) can be manufactured, for example, by the following method.

The diacrylate represented by the formula (1) having an acryloyl group can be synthesized by esterification of a polyol compound represented by the following formula with acrylic acid. R², R³, R⁴, R⁵, R⁶, a, b, c, d and e in the following polyol compound are the same as those in the formula (1).

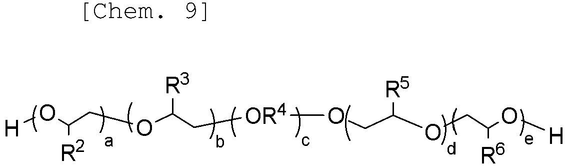

Specifically, the polyol compound and acrylic acid dissolved in a solvent such as toluene are stirred while heating, as necessary, in the presence of a mineral acid such as sulfuric acid or hydrochloric acid, an organic acid such as aromatic sulfonic acid, or a Lewis acid such as boron fluoride ether can be reacted while water generated is removed by azeotropy. Note here that methods for removing water in the esterification reaction include a method of removing water using a drying agent such as anhydrous magnesium sulfate or molecular sieves, or a method of removing water in the presence of a dehydrating agent such as dicyclohexylcarbodiimide.

Also, synthesis can be carried out by an esterification reaction using acrylic acid halide. Specifically, a method can be employed in which the above polyol compound and acrylic acid dissolved in an ether solvent such as tetrahydrofuran in the presence of a base such as pyridine and dimethylaniline are stirred, while being heated, as necessary, and the generated hydrogen halide is removed.

Furthermore, synthesis can be carried out by carrying out a transesterification with an ester compound such as acrylic anhydride and methyl acrylate. Specifically, a method can be employed in which the above polyol compound and acrylic acid are dissolved in a solvent such as toluene in the presence of an acidic catalyst such as aromatic sulfonic acid or a basic catalyst such as sodium acetate or pyridine, and stirred while being heated as necessary.

The compound represented by the formula (1) having a methacryloyl group can be synthesized in the similar manner to the above, for example, by using methacrylic acid instead of acrylic acid.

Among the above polyol compounds, polyol compounds in which a and e are 0 and b and d are 1 or more, that is, polyols having a second alkylene oxide unit, can be synthesized, for example, by the following method.

A polyol having a second alkylene oxide unit can be synthesized by reacting H-(OR⁴)c-OH with a cyclic ether compound such as ethylene oxide or propylene oxide. The polyol compound having a second alkylene oxide unit can be synthesized, for example, by carrying out the reaction in a nitrogen-substituted autoclave under high temperature and pressure in the presence of a catalyst such as an alkali metal hydroxide such as potassium hydroxide.

Among the above polyol compounds, a polyol compound in which a, b, d, and e are 1 or more, that is, a di(meth)acrylate represented by the formula (1) further including second and third alkylene oxide units, can be synthesized, for example, by the following method.

A polyol compound including a third alkylene oxide unit is synthesized by reacting a polyol compound including a second alkylene oxide unit with a cyclic ether compound, and a polyol compound further including the resulting third alkylene oxide unit is reacted with acrylic acid or methacrylic acid in a manner similar to the method described above so that a di(meth)acrylate represented by the formula (1) further including second and third alkylene oxide units can be synthesized.

The second (meth)acrylate may include a di(meth)acrylate represented by the following formula (4).

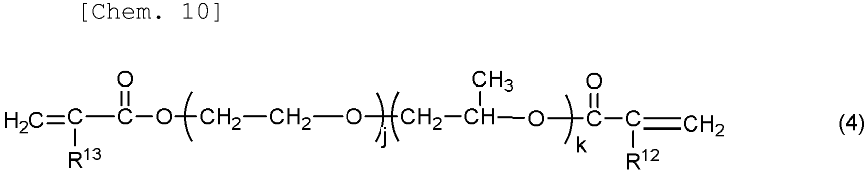

In the above formula (4), R¹² and R¹³ are each independently a hydrogen atom or a methyl group. j and k are each independently an integer of 0 or more, and j + k is an integer of 2 or more. Furthermore, the di(meth)acrylate represented by the formula (4) is often obtained as a mixture in manufacturing. Therefore, j + k is an integer of 2 or more as an average value, and preferably an integer of 2 or more and 50 or less as an average value.

Specific examples of the compounds represented by the above formula (4) are as follows.

Polyethylene glycol dimethacrylate, polypropylene glycol dimethacrylate, polyethylene glycol diacrylate, polypropylene glycol diacrylate, dimethacrylate obtained from polyol consisting of a copolymer of polyethylene glycol and polypropylene glycol,
diacrylate obtained from polyol consisting of a copolymer of polyethylene glycol and polypropylene glycol.

The second (meth)acrylate may include a di(meth)acrylate represented by the following formula (4').

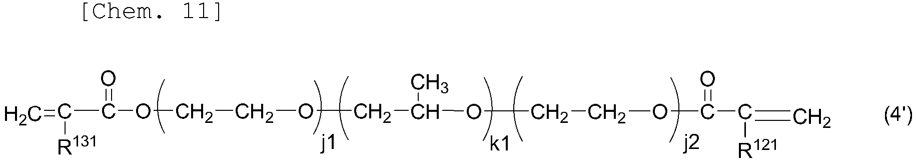

In the above formula (4'), R¹²¹ and R¹³¹ are each independently a hydrogen atom or a methyl group.
j1, j2, and k1 are each independently an integer of 1 or more. Furthermore, the di(meth)acrylate represented by the formula (4') is often obtained as a mixture in manufacturing. Therefore, j1 + j2 + k1 is 3 or more as an average value, and preferably an integer of 3 or more and 50 or less as an average value. Specific examples of the bifunctional (meth)acrylate represented by the above formula (4') include dimethacrylate obtained from a polyol consisting of a triblock copolymer having a polyethylene glycol structure at both ends of a polypropylene glycol, a diacrylate obtained from a polyol consisting of a triblock copolymer having a polyethylene glycol structure at both ends of a polypropylene glycol, and the like. The second (meth)acrylate may include a di(meth)acrylate represented by the following formula (5).

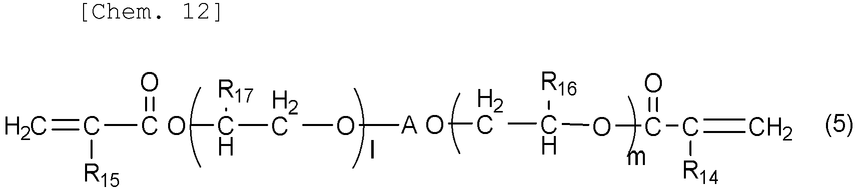

In the above formula (5), R¹⁴ and R¹⁵ are each a hydrogen atom or a methyl group. R1⁶ and R¹⁷ are each a hydrogen atom or a methyl group.

A is a divalent organic group. A is a linear or branched alkylene group having 1 to 20 carbon atoms, halogen, or a phenylene group optionally having an alkyl group having 1 to 5 carbon atoms as a substituent, a cycloalkylene group, a bicycloalkylene group, a tricycloalkylene group, or groups represented by any of the following formulae.

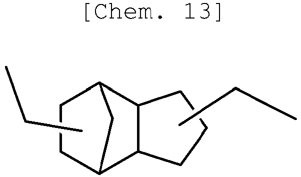

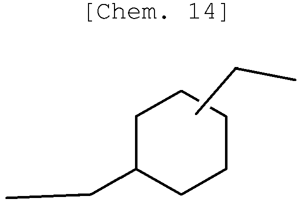

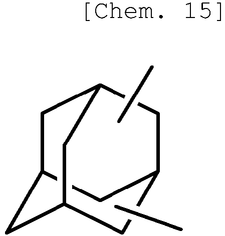

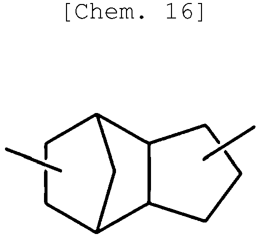

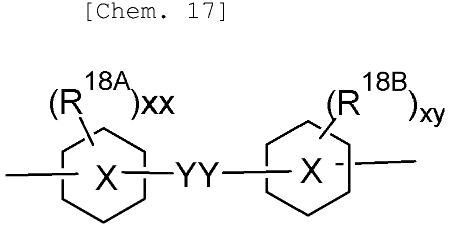

In the above formulae, R^{18A} and R^{18B} are a hydrogen atom, an alkyl group having 1 to 5 carbon atoms, or a halogen atom. xx and xy are 0 to 4 or 0 to 10. Ring X is a benzene ring or a cyclohexane ring. YY is -O-, -S-, -(SO₂)-, -CO-, -CH₂-, -CH=CH-, -C(CH₃)₂-, -C(CH₃)(C₆H₅)-, or a group represented by any of the following formulae.

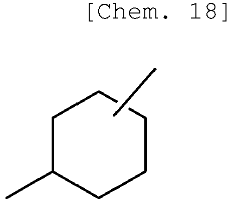

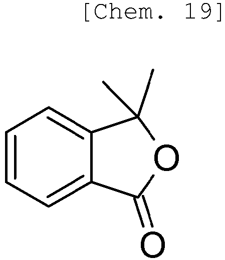

In the above formula (5), l and m are each an integer of 0 or 1 or more, and l + m is 2 or more and 30 or less as an average value.

Specific examples of the bifunctional (meth)acrylate represented by the above formula (5) include alkoxylated bisphenol A diacrylate, alkoxylated bisphenol A dimethacrylate, and the like.

The second (meth)acrylate may include a di(meth)acrylate represented by the following formula (6).

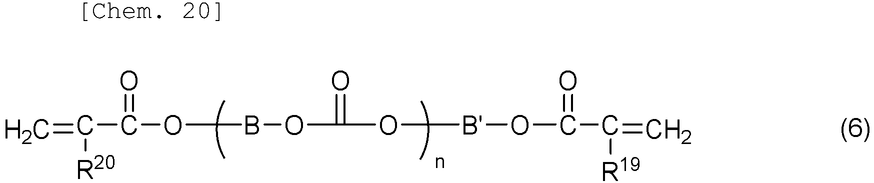

In the above formula (6), R¹⁹ and R²⁰ are each a hydrogen atom or a methyl group.

n is a number of 1 to 20 as an average value.

B and B' are each independently a linear or branched alkylene group having 2 to 15 carbon atoms. B and B' may be the same as or different from each other. When a plurality of B's is present, the plurality of B's may be the same or different groups.

The bifunctional (meth)acrylate represented by the above formula (6) can be manufactured by reacting a polycarbonate diol with (meth)acrylic acid.

The polycarbonate diols used here include, for example, the followings. Specific examples include polycarbonate diol (number average molecular weight: 750 to 2000) obtained by phosgenation of trimethylene glycol, polycarbonate diol (number average molecular weight: 750 to 2000) obtained by phosgenation of tetramethylene glycol, polycarbonate diol (number average molecular weight: 750 to 2000) obtained by phosgenation of pentamethylene glycol, polycarbonate diol (number average molecular weight: 750 to 2000) obtained by phosgenation of hexamethylene glycol, polycarbonate diol (number average molecular weight: 750 to 2000) obtained by phosgenation of octamethylene glycol, polycarbonate diol (number average molecular weight: 750 to 2000) obtained by phosgenation with nonamethylene glycol, polycarbonate diol (number average molecular weight: 750 to 2000) obtained by phosgenation of triethylene glycol and tetramethylene glycol, polycarbonate diol (number average molecular weight: 750 to 2000) obtained by phosgenation of tetramethylene glycol and hexamethylene diglycol, polycarbonate diol (number average molecular weight: 750 to 2000) obtained by phosgenation of pentamethylene glycol and hexamethylene glycol, polycarbonate diol (number average molecular weight: 750 to 2000) obtained by phosgenation of tetramethylene glycol and octamethylene glycol, polycarbonate diol (number average molecular weight: 750 to 2000) obtained by phosgenation of hexamethylene glycol and octamethylene glycol, and polycarbonate diol (number average molecular weight: 750 to 2000) obtained by phosgenation of 1-methyltrimethylene glycol.

The second (meth)acrylate may include di(meth)acrylate having a urethane bond, that is, urethane di(meth)acrylate. The urethane di(meth)acrylate is obtained by reacting a polyisocyanate compound having two isocyanate groups in the molecule thereof, a polyol compound having two hydroxyl groups in the molecule thereof, and a hydroxyl group-containing (meth)acrylate.

Suitable examples of polyisocyanate include hexamethylene diisocyanate, isophorone diisocyanate, lysine isocyanate, 2,2,4-hexamethylene diisocyanate, dimer acid diisocyanate, isopropylidenebis-4-cyclohexyl isocyanate, dicyclohexylmethane diisocyanate, norbornene diisocyanate, or methylcyclohexane diisocyanate.

Examples of polyols include polyalkylene glycols having the repeating unit of ethylene oxide having 2 to 4 carbon atoms, propylene oxide, hexamethylene oxide, or polyester diols such as polycaprolactone diol. Examples also include polycarbonate diol, polybutadiene diol, or pentaerythritol, ethylene glycol, propylene glycol, 1,3-propanediol, 1,4-butanediol, 1,5-pentanediol, 1,6-hexanediol, 1,9-nonanediol, 1,8-nonanediol, neopentyl glycol, diethylene glycol, dipropylene glycol, 1,4-cyclohexanediol, 1,4-cyclohexanedimethanol, glycerin, trimethylolpropane, and the like.

Furthermore, a reaction mixture obtained by further reacting urethane prepolymer having an isocyanate group at the end thereof by the reaction of these polyisocyanates and polyols with 2-hydroxy(meth)acrylate, or urethane(meth)acrylate monomers, and the like, which are reaction mixtures obtained by directly reacting the diisocyanate with 2-hydroxy(meth)acrylate can also be used.

Examples of the hydroxyl group-containing (meth)acrylates include 2-hydroxyethyl(meth)acrylate, 2-hydroxypropyl(meth)acrylate, 3-hydroxypropyl(meth)acrylate, 3-hydroxybutyl(meth)acrylate, 4-hydroxybutyl(meth)acrylate, and the like.

As the bifunctional (meth)acrylate having a urethane bond, commercially available products can be used without any restrictions, and examples include UA-122P (manufactured by Shin-Nakamura Chemical Co., Ltd., molecular weight: 1100) and U-122P (manufactured by Shin-Nakamura Chemical Co., Ltd., molecular weight: 1100).

### <Third (meth)acrylate>

The curable composition according to the embodiment preferably further includes a third (meth)acrylate. When the third (meth)acrylate is included, the appearance of the cured body tends to be enhanced.

The third (meth)acrylate has a number average molecular weight of less than 850 and has three or more (meth)acryloyl groups. The number of (meth)acryloyl groups can be 3, 4, 5, 6, 7, or 8. The number average molecular weight of the third (meth)acrylate can be measured, for example, by gel permeation chromatography (GPC). In terms of enhancing the functionality of the cured body, the number average molecular weight of the third (meth)acrylate is preferably 250 or more, and more preferably 300 or more. In terms of enhancing the appearance of the cured body, the number average molecular weight of the third (meth)acrylate is preferably 800 or less, more preferably 700 or less, and further preferably 600 or less.

In the curable composition, the proportion of the third (meth)acrylate is preferably 5% by mass or more, more preferably 10% by mass or more, and further preferably 20% by mass or more in terms of enhancing the appearance of the cured body. The proportion of the third (meth)acrylate is preferably 50% by mass or less, more preferably 40% by mass or less, and further preferably 30% by mass or less in terms of enhancing the functionality of the cured body. This proportion can be determined, for example, by measuring the mass of the third (meth)acrylate separated by silica gel column chromatography.

The ratio M1/M3 of the mass M1 of the first (meth)acrylate to the mass M3 of the third (meth)acrylate is preferably 0.1 or more and 10.0 or less. The ratio M1/M3 is more preferably 0.2 or more and 5.0 or less, and further preferably 0.5 or more and 3.0 or less.

The ratio M2/M3 of the mass M2 of the second (meth)acrylate to the mass M3 of the third (meth)acrylate is preferably 0.1 or more and 20.0 or less. The ratio M2/M3 is more preferably 0.2 or more and 10.0 or less, and further preferably 0.5 or more and 2.0 or less.

In the curable composition, when the (meth)acrylate component is composed only of the first to third (meth)acrylates, the proportion of the first (meth)acrylate in the (meth)acrylate component is, for example, 20% by mass or more and 50% by mass or less, and preferably 25% by mass or more and 40% by mass or less. The proportion of the second (meth)acrylate in the (meth)acrylate component is, for example, 20% by mass or more and 70% by mass or less, preferably 25% by mass or more and 60% by mass or less, and more preferably 35% by mass or more and 50% by mass or less. The proportion of the third (meth)acrylate in the (meth)acrylate component is the remainder, and is, for example, 5% by mass or more and 40% by mass or less, preferably 10% by mass or more and 35% by mass or less, and more preferably 25% by mass or more and 30% by mass or less.

The third (meth)acrylate is preferably an acyclic (meth)acrylate that does not include a cyclic structure such as an aromatic ring or an aliphatic ring. When such a third (meth)acrylate is used, the functionality of the cured body tends to be enhanced.

The third (meth)acrylate may include at least one structure selected from the group consisting of an ester bond, a urethane bond, a urea bond, and a carbonyl group. It is preferable that the third (meth)acrylate does not include any of the structures of an ester bond, a urethane bond, a urea bond, and a carbonyl group.

Raw materials for the third (meth)acrylate may be a compound derived from a biological resource or a compound derived from a fossil resource.

As the third (meth)acrylate, a compound represented by the above formula (I) and having a number average molecular weight of less than 850 can be suitably used. Specifically, it is preferable to use one represented by the following formula (Ia).

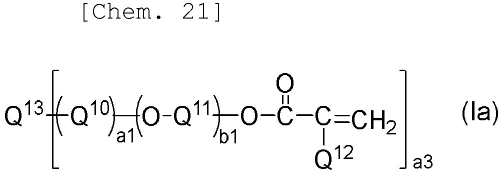

In the formula (Ia), Q¹⁰, Q¹¹, Q¹², Q¹³, a1, and a3 are the same as those in the formula (I).
b1 is 0, 1, 2, or 3.

It is more preferable that the third (meth)acrylate includes a trifunctional to tetrafunctional (meth)acrylate represented by the following formula (IIa).

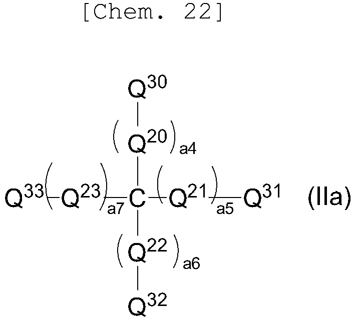

In the formula (IIa), Q²⁰, Q²¹, Q²², Q²³, a4, a5, a6, and a7 are the same as those in the formula (II).

Q³⁰, Q³¹, and Q³² are each independently a monovalent group represented by the following formula (IIIa).

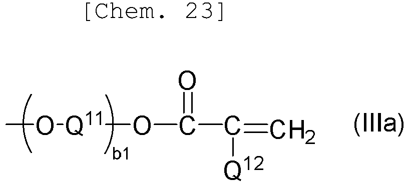

In the formula (IIIa), Q¹¹, Q¹², and b1 are the same as those in the formula (Ia).

Q³⁰, Q³¹, and Q³² may have different structures or the same structure. It is preferred that Q³⁰, Q³¹, and Q³² have the same structure.

Q³³ is a hydrogen atom, a linear or branched alkyl group having 1 to 5 carbon atoms, a linear or branched alkoxy group having 1 to 5 carbon atoms, or a monovalent group represented by the formula (IIIa). Q3³ is preferably a hydrogen atom, a linear alkyl group having 1 to 3 carbon atoms, or a monovalent group represented by the formula (IIIa).

Specific examples of polyfunctional (meth)acrylates represented by the above formula (Ia) include trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropane triethylene glycol trimethacrylate, trimethylolpropane triethylene glycol triacrylate, ditrimethylolpropane tetramethacrylate, ditrimethylolpropane tetraacrylate, dipentaerythritol hexaacrylate, dipentaerythritol pentaacrylate, dipentaerythritol hexamethacrylate, dipentaerythritol pentamethacrylate, and the like.

The third (meth)acrylate may include a polyfunctional (meth)acrylate having a urethane bond. Commercially available products include U-4HA (molecular weight: 596, number of functional groups: 4) and U-6LPA (molecular weight: 818, number of functional groups: 6) manufactured by Shin-Nakamura Chemical Co., Ltd.

### <Fourth (meth)acrylate>

The curable composition according to the embodiment preferably further includes a fourth (meth)acrylate. When the fourth (meth)acrylate is included, the appearance of the cured body tends to be enhanced.

The fourth (meth)acrylate is a di(meth)acrylate having a number average molecular weight of less than 850 and having two (meth)acryloyl groups. The number average molecular weight of the fourth (meth)acrylate can be measured, for example, by gel permeation chromatography (GPC). In terms of enhancing the functionality of the cured body, the number average molecular weight of the fourth (meth)acrylate is preferably 300 or more, more preferably 400 or more, and further preferably 500 or more. In terms of enhancing the appearance of the cured body, the number average molecular weight of the fourth (meth)acrylate is preferably 800 or less, more preferably 750 or less, and further preferably 700 or less.

In the curable composition, the proportion of the fourth (meth)acrylate is preferably 1% by mass or more, more preferably 5% by mass or more, and further preferably 10% by mass or more in terms of enhancing the appearance of the cured body. The proportion of the fourth (meth)acrylate is preferably 50% by mass or less, more preferably 40% by mass or less, and further preferably 30% by mass or less in terms of enhancing the functionality of the cured body. This proportion can be determined, for example, by measuring the mass of the fourth (meth)acrylate separated by silica gel column chromatography.

The ratio M1/M4 of the mass M1 of the first (meth)acrylate to the mass M4 of the fourth (meth)acrylate is preferably 0.1 or more and 20.0 or less. The ratio M1/M4 is more preferably 0.5 or more and 10.0 or less, and further preferably 1.0 or more and 5.0 or less.

The ratio M2/M4 of the mass M2 of the second (meth)acrylate to the mass M4 of the fourth (meth)acrylate is preferably 0.1 or more and 20.0 or less. The ratio M2/M4 is more preferably 0.5 or more and 10.0 or less, and further preferably 1.0 or more and 5.0 or less.

The ratio M3/M4 of the mass M3 of the third (meth)acrylate to the mass M4 of the fourth (meth)acrylate is preferably 0.1 or more and 20.0 or less. The ratio M3/M4 is more preferably 0.5 or more and 10.0 or less, and further preferably 1.0 or more and 5.0 or less.

The fourth (meth)acrylate preferably includes one or more acryloyl groups, and is more preferably a diacrylate having two acryloyl groups. When a fourth (meth)acrylate including an acryloyl group is used, the polymerization property of the curable composition is increased, and the appearance of the cured body tends to be enhanced.

The fourth (meth)acrylate preferably includes a polycarbonate structure. When such a fourth (meth)acrylate is used, the appearance of the cured body tends to be enhanced.

The fourth (meth)acrylate is preferably an acyclic (meth)acrylate that does not include a cyclic structure such as an aromatic ring or an aliphatic ring. When such a fourth (meth)acrylate is used, the functionality of the cured body tends to be enhanced.

The fourth (meth)acrylate may include at least one structure selected from the group consisting of a urethane bond and a urea bond. It is preferable that the fourth (meth)acrylate does not include both a urethane bond or a urea bond.

Raw materials for the fourth (meth)acrylate may be a compound derived from a biological resource or a compound derived from a fossil resource.

In the curable composition, when the (meth)acrylate component is composed only of the first to fourth (meth)acrylates, the proportion of the first (meth)acrylate in the (meth)acrylate component is, for example, 20% by mass or more and 40% by mass or less, and preferably 25% by mass or more and 30% by mass or less. The proportion of the second (meth)acrylate in the (meth)acrylate component is, for example, 20% by mass or more and 50% by mass or less, and preferably 25% by mass or more and 45% by mass or less, and more preferably 35% by mass or more and 40% by mass or less. The proportion of the third (meth)acrylate in the (meth)acrylate component is, for example, 5% by mass or more and 40% by mass or less, preferably 10% by mass or more and 35% by mass or less, and more preferably 25% by mass or more and 30% by mass or less. The proportion of the third (meth)acrylate in the (meth)acrylate component is the remainder, and is, for example, 1% by mass or more and 30% by mass or less, preferably 5% by mass or more and 25% by mass or less, and more preferably 10% by mass or more and 20% by mass or less.

As the fourth (meth)acrylate, a compound represented by the above formula (1), (3), (4), (4'), (5), or (6) having a number average molecular weight of less than 850 can be suitably used. A compound represented by the above formula (1), (3), (5), or (6) can be particularly suitably used. When a compound represented by the formula (1) or formula (3) is included, the functionality of the cured body can be improved. When a compound represented by the formula (5) or formula (6) is included, the appearance of the cured body can be improved.

Specific examples of the fourth (meth)acrylate represented by the formula (1) include polypropylene glycol di(meth)acrylate. Specific examples of the fourth (meth)acrylate represented by the formula (3) include polyethylene glycol di(meth)acrylate, polytrimethylene glycol di(meth)acrylate, polytetramethylene glycol di(meth)acrylate, polypentamethylene glycol di(meth)acrylate, polyhexamethylene glycol di(meth)acrylate, and the like.

A specific example of the fourth (meth)acrylate represented by the formula (5) is neopentyl glycol di(meth)acrylate.

Specific examples of the fourth (meth)acrylate represented by the formula (6) include those obtained by reacting the following polycarbonate diols with (meth)acrylic acid. Examples include polycarbonate diol (number average molecular weight: 500 to 700) obtained by phosgenation of trimethylene glycol, polycarbonate diol (number average molecular weight: 500 to 700) obtained by phosgenation of tetramethylene glycol, polycarbonate diol (number average molecular weight: 500 to 700) obtained by phosgenation of pentamethylene glycol, polycarbonate diol (number average molecular weight: 500 to 700) obtained by phosgenation of hexamethylene glycol, polycarbonate diol (number average molecular weight: 500 to 700) obtained by phosgenation of octamethylene glycol, polycarbonate diol (number average molecular weight: 500 to 700) obtained by phosgenation with nonamethylene glycol, polycarbonate diol (number average molecular weight: 500 to 700) obtained by phosgenation of triethylene glycol and tetramethylene glycol, polycarbonate diol (number average molecular weight: 500 to 700) obtained by phosgenation of tetramethylene glycol and hexamethylene diglycol, polycarbonate diol (number average molecular weight: 500 to 700) obtained by phosgenation of pentamethylene glycol and hexamethylene glycol, polycarbonate diol (number average molecular weight: 500 to 700) obtained by phosgenation of tetramethylene glycol and octamethylene glycol, polycarbonate diol (number average molecular weight: 500 to 700) obtained by phosgenation of hexamethylene glycol and octamethylene glycol, and polycarbonate diol (number average molecular weight: 500 to 700) obtained by phosgenation of 1-methyltrimethylene glycol.

The fourth (meth)acrylate may include a sulfur atom. The sulfur atom is preferably a sulfide group that forms a part of the molecular chain. Specific examples include bis(2-methacryloyloxyethylthioethyl)sulfide, bis(methacryloyloxyethyl)sulfide, bis(acryloyloxyethyl)sulfide, 1,2-bis(methacryloyloxyethylthio)ethane, 1,2-bis(acryloyloxyethyl)ethane, bis(2-methacryloyloxyethylthioethyl)sulfide, bis(2-acryloyloxyethylthioethyl)sulfide, 1,2-bis(methacryloyloxyethylthioethylthio)ethane, 1,2-bis(acryloyloxyethylthioethylthio)ethane, 1,2-bis(methacryloyloxyisopropylthioisopropyl)sulfide, and 1,2-bis(acryloyloxyisopropylthioisopropyl)sulfide.

### <Fifth (meth)acrylate>

The curable composition according to the embodiment may further include a fifth (meth)acrylate. The fifth (meth)acrylate is a monofunctional (meth)acrylate having one (meth)acryloyl group.

In the curable composition, the proportion of the fifth (meth)acrylate is preferably 1% by mass or more, more preferably 2% by mass or more, and further preferably 3% by mass or more, in terms of enhancing the appearance of the cured body. The proportion of the fifth (meth)acrylate is preferably 20% by mass or less, more preferably 10% by mass or less, and further preferably 8% by mass or less in terms of enhancing the functionality of the cured body. The proportion may also be 5% by mass or more, or 15% by mass or less. This proportion can be determined, for example, by measuring the mass of the fifth (meth)acrylate separated by silica gel column chromatography.

In the curable composition, when the (meth)acrylate component is composed only of the first to fifth (meth)acrylates, the proportion of the first (meth)acrylate in the (meth)acrylate component is, for example, 20% by mass or more and 40% by mass or less, and preferably 25% by mass or more and 30% by mass or less. The proportion of the second (meth)acrylate in the (meth)acrylate component is, for example, 20% by mass or more and 50% by mass or less, preferably 25% by mass or more and 45% by mass or less, and more preferably 35% by mass or more and 40% by mass or less. The proportion of the third (meth)acrylate in the (meth)acrylate component is, for example, 5% by mass or more and 40% by mass or less, preferably 10% by mass or more and 35% by mass or less, and more preferably 25% by mass or more and 30% by mass or less. The proportion of the fourth (meth)acrylate in the (meth)acrylate component is, for example, 1% by mass or more and 30% by mass or less, preferably 5% by mass or more and 25% by mass or less, and more preferably 10% by mass or more and 20% by mass or less. The proportion of the fifth (meth)acrylate in the (meth)acrylate component is the remainder, and is, for example, 1% by mass or more and 20% by mass or less, preferably 3% by mass or more and 15% by mass or less, and more preferably 5% by mass or more and 10% by mass or less.

Raw materials for the fifth (meth)acrylate may be a compound derived from a biological resource or a compound derived from a fossil resource.

As the fifth (meth)acrylate, a monofunctional (meth)acrylate represented by the following formula (7) can be used.

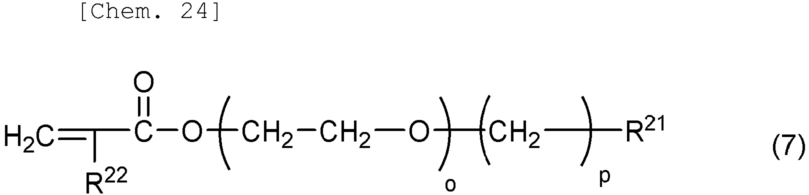

In the formula (7), R²¹ is a hydrogen atom, a methyldimethoxysilyl group, a trimethoxysilyl group, a glycidyl group, a 1,2,2,6,6-pentamethylpiperidino group, or a 2,2,6,6-tetramethylpiperidino group. R2² is a hydrogen atom or a methyl group.
o is an integer of 0 or 1 to 10.
p is an integer of 0 or 1 to 20.

R²¹ is preferably a methyldimethoxysilyl group, a trimethoxysilyl group, or a glycidyl group. When a monofunctional acrylate having such a functional group is included, the adhesion between the cured body and the base material, or between the cured body and a hard coat film to be post-processed, tends to be improved.

In terms of enhancing the durability of the cured body, R²¹ is preferably a 1,2,2,6,6-pentamethylpiperidino group or a 2,2,6,6-tetramethylpiperidino group. Such a monofunctional acrylate can function as a light stabilizer (Hindered Amine Light Stabilizers (HALS)). In the curable composition according to the embodiment, the HALS tends to bleed out easily. By blending a HALS having a (meth)acryloyl group, the bleed out of the HALS can be suppressed.

Specific examples of monofunctional (meth)acrylates represented by the above formula (7) include methoxypolyethylene glycol methacrylate, methoxypolyethylene glycol acrylate, stearyl methacrylate, lauryl methacrylate, methyl acrylate, ethyl acrylate, butyl acrylate, octyl acrylate, lauryl acrylate, γ-methacryloyloxypropyltrimethoxysilane, γ-methacryloyloxypropylmethyldimethoxysilane, glycidyl methacrylate, 1,2,2,6,6-pentamethyl-4-piperidyl(meth)acrylate, 2,2,6,6-tetramethyl-4-piperidyl(meth)acrylate, and the like.

### <Other radical polymerizable compound>

The curable composition according to the embodiment may further include another radical polymerizable monomer. Such another radical polymerizable monomer may be one selected from the group consisting of (meth)acrylates having a number average molecular weight of more than 3000, compounds having an allyl group, or compounds having a vinyl group.

The (meth)acrylates having a number average molecular weight of more than 3000 include those having the structural formula given for the first (meth)acrylate or the second (meth)acrylate and having a number average molecular weight of more than 3000. The (meth)acrylates having a number average molecular weight of more than 3000 include polyrotaxane and silsesquioxane having a plurality of radically polymerizable groups.

Polyrotaxane has a composite molecular structure including an axis molecule and a plurality of cyclic molecules enclosing the axis molecule. Bulky terminal groups are formed on both ends of the axis molecule, preventing the cyclic molecules from falling off from the axis molecule. Polyrotaxane with radical polymerization property is a polyrotaxane in which a radical polymerizable group is introduced into the side chain of the cyclic molecules. The radical polymerizable group is introduced, for example, by modifying 1 mol % or more and less than 100 mol % of the hydroxyl groups of the cyclic molecules to radical polymerizable groups. The cyclic molecules are preferably a cyclodextrin ring, a crown ether ring, a benzocrown ring, a dibenzocrown ring, and a dicyclohexanocrown ring, particularly preferably a cyclodextrin ring and a crown ether ring, and most preferably a cyclodextrin ring.

Silsesquioxane having a radical polymerizable group have various molecular structures such as cage-shaped, laddershaped, and random, and include a radical polymerizable group such as (meth)acrylic groups.

Examples of such a silsesquioxane polymerizable compound include compounds represented by the following formula (8).

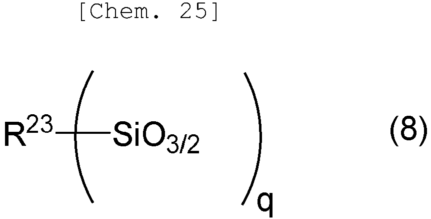

In the formula (8), q represents the degree of polymerization and is an integer of 3 to 100.

A plurality of R²³ may be the same as or different from each other, and each is a radical polymerizable group, an organic group including a radical polymerizable group, a hydrogen atom, an alkyl group, a cycloalkyl group, an alkoxy group, or a phenyl group, and at least one R²³ is a radical polymerizable group or an organic group including a radical polymerizable group.

Herein, examples of the radical polymerizable group represented by R²³ or the organic group including a radical polymerizable group include a (meth)acrylic group; an organic group having a (meth)acrylic group, such as a (meth)acryloyloxypropyl group or a (3-(meth)acryloyloxypropyl)dimethylsiloxy group; an allyl group; an organic group having an allyl group, such as an allylpropyl group and an allylpropyldimethylsiloxy group; a vinyl group; and an organic group having a vinyl group, such as a vinylpropyl group and a vinyldimethylsiloxy group.

Examples of the allyl-based polymerizable compounds having an allyl group include the following. Examples include diethylene glycol bisallyl carbonate, methoxypolyethylene glycol allyl ether, methoxypolyethylene glycol-polypropylene glycol allyl ether, butoxypolyethylene glycol-polypropylene glycol allyl ether, phenoxypolyethylene glycol allyl ether, vinyloxypolyethylene glycol allyl ether, styryloxypolyethylene glycol allyl ether, and methoxypolyethylene thioglycol allyl thioether.

Examples of the vinyl-based polymerizable compounds having a vinyl group include methyl vinyl ketone, ethyl vinyl ketone, ethyl vinyl ether, styrene, vinylcyclohexane, butadiene, 1,4-pentadiene, divinyl sulfide, divinyl sulfone, 1,2-divinylbenzene, 1,3-divinyl-1,1,3,3-tetramethylpropanedisiloxane, diethylene glycol divinyl ether, divinyl adipate, divinyl sebacate, ethylene glycol divinyl ether, divinyl sulfoxide, divinyl persulfide, dimethyldivinylsilane, 1,2,4-trivinylcyclohexane, methyltrivinylsilane, α-methylstyrene, α-methylstyrene dimer, and the like.

### <Functional dye>

The functional dye includes a compound having a selective absorption ability of visible light, and a compound that develops color, decolors, or discolors due to energy such as light, heat, an electric field, or pressure. Such a functional dye can exhibit a specific function by undergoing a structural change under specific conditions. The functional dye includes, for example, at least one selected from the group consisting of a photochromic compound, an ultraviolet absorber, a blue light absorber, an infrared absorber, and an electrochromic compound.

The content of the functional dye in the curable composition is, for example, 0.01% by mass or more and 20% by mass or less. The content of the functional dye is preferably 0.1% by mass or more and 10% by mass or less, and more preferably 1% by mass or more and 5% by mass or less.

### <Photochromic compound>

As the photochromic compound, known photochromic compounds can be used without any limitation, and these can be used alone or in combination of two or more. Representative examples of such photochromic compounds are a chromene compound, a fulgide compound, a fulgimide compound, and a spirooxazine compound. Among these photochromic compounds, a chromene compound and a spirooxazine compound are preferably used. In particular, a chromene compound is preferable. Chromene compounds include a compound having a 1-benzopyran skeleton, a spiropyran compound having a spiropyran skeleton, and a naphthopyran compound having a naphthopyran skeleton.

The naphthopyran compound preferably includes at least one of the compounds shown in the following formulae (9), (10), (11), (12), (13), and (14).

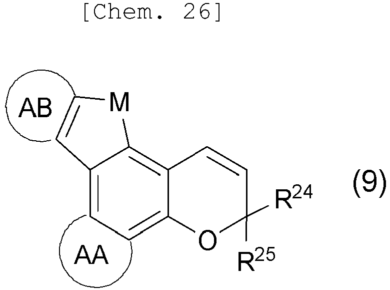

In the formula (9), a ring AA is a substituted or unsubstituted aromatic hydrocarbon ring, a substituted or unsubstituted aromatic heterocyclic ring, or a substituted or unsubstituted fused polycyclic ring in which an aromatic ring or an aromatic heterocyclic ring is fused to these rings. Ring AA need not be present.

Ring AB is a substituted or unsubstituted aromatic hydrocarbon ring, a substituted or unsubstituted aromatic heterocyclic ring, or a substituted or unsubstituted fused polycyclic ring in which an aromatic ring or an aromatic heterocyclic ring is fused to these rings.

R²⁴ and R²⁵ each independently represents a hydrogen atom or a substituent, and two or more of the substituents may be bonded to form a ring structure.

The substituent is preferably at least one selected from the group consisting of a hydroxyl group, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group optionally having a substituent, an aralkoxy group optionally having a substituent, an aryloxy group optionally having a substituent, an alkylthio group, an arylthio group optionally having a substituent, an aryl group optionally having a substituent, an amino group, a substituted amino group, and a heterocyclic group optionally having a substituent, a haloalkylthio group, a cycloalkylthio group optionally having a substituent, an oligomer group, and the group represented by the following formula (15).

-Q¹-(P¹Q²)ₐₐ-P²Q³ (15)

Q¹ is an alkylene group which may include a halogen atom in the substituent. Q2 is an alkylene group which may include a halogen atom in the substituent. Q3 is an alkyl group which may include a halogen atom in the substituent. P¹, and P² are each independently O, S, NR⁷⁰⁰, PR⁷⁰¹, or P(=O). R⁷⁰⁰ is a hydrogen atom, an alkyl group optionally having a substituent, a cycloalkyl group optionally having a substituent, an aryl group optionally having a substituent, or a heteroaryl group optionally having a substituent. R⁷⁰¹ is a hydrogen atom, an alkyl group optionally having a substituent, a cycloalkyl group optionally having a substituent, an aryl group optionally having a substituent, or a heteroaryl group optionally having a substituent.
aa is 0 or 1 to 10.

In the formula (9), M is CR²⁶R²⁷, SiR²⁶R²⁷, GeR²⁶R²⁷, or NR²⁶. R²⁶ and R²⁷ are each independently a hydrogen atom or a substituent, and two or more of the substituents may be bonded to form a ring structure.

The substituent is preferably at least one selected from the group consisting of a hydroxyl group, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group optionally having a substituent, an aralkoxy group optionally having a substituent, an aryloxy group optionally having a substituent, an alkylthio group, an arylthio group optionally having a substituent, an aryl group optionally having a substituent, an amino group, a substituted amino group, a heterocyclic group optionally having a substituent, and a group represented by the above formula (15).

Furthermore, when R²⁶ and R²⁷ together form a ring structure, it is preferable to form an aliphatic ring having 3 to 20 ring carbon atoms, a fused polycyclic ring in which an aromatic ring or an aromatic heterocyclic ring is fused to an aliphatic ring, a heterocyclic ring having 3 to 20 ring atoms, or a fused polycyclic ring in which an aromatic ring or an aromatic heterocyclic ring is fused to a heterocyclic ring.

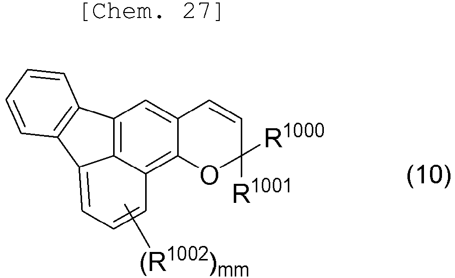

In the formula (10), R¹⁰⁰⁰, R¹⁰⁰¹, and R¹⁰⁰² are each independently a hydrogen atom or a substituent, and two or more substituents may be bonded to form a ring structure. The substituents of the same kinds as those described in the formula (9) can be used.
mm is 1 to 10.

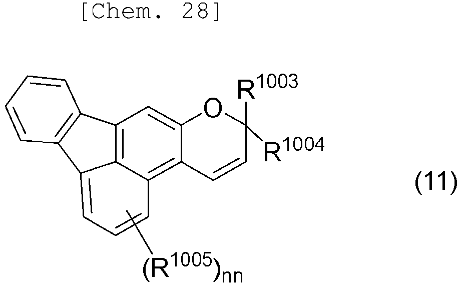

In the formula (11), R¹⁰⁰³, R¹⁰⁰⁴, and R¹⁰⁰⁵ are each independently a hydrogen atom or a substituent, and two or more substituents may be bonded to form a ring structure. The substituents of the same kinds as those described in the formula (9) can be used.
nn is 1 to 10.

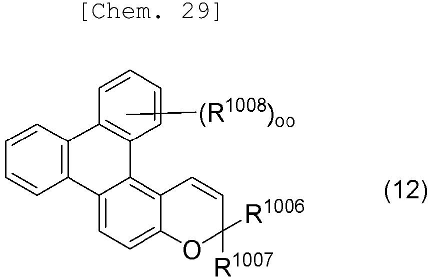

In the formula (12), R¹⁰⁰⁶, R¹⁰⁰⁷ and R¹⁰⁰⁸ are each independently a hydrogen atom or a substituent, and two or more substituents may be bonded to form a ring structure. The substituents of the same kinds as those described in the formula (9) can be used.
oo is 1 to 12.

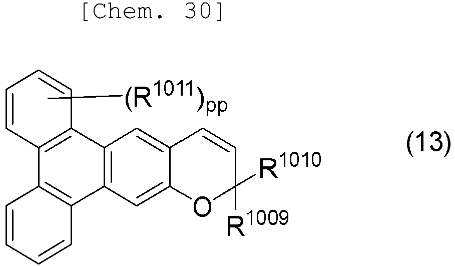

In the formula (13), R¹⁰⁰⁹, R¹⁰¹⁰, and R¹⁰¹¹ are each independently a hydrogen atom or a substituent, and two or more substituents may be bonded to form a ring structure. The substituents of the same kinds as those described in the formula (9) can be used.
pp is 1 to 12.

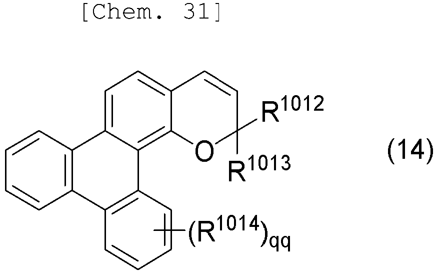

In the formula (14), R¹⁰¹², R¹⁰¹³, and R¹⁰¹⁴ are each independently a hydrogen atom or a substituent, and two or more substituents may be bonded to form a ring structure. The substituents of the same kinds as those described in the formula (9) can be used.
qq is 1 to 12.

The naphthopyran compound includes an indenonaphthopyran compound having an indenonaphthopyran skeleton. The indenonaphthopyran compound preferably has an indeno[2,1-f]naphtho[1,2-b]pyran skeleton.

In addition to the above, a photochromic compound having an oligomer chain group in the molecule can also be suitably used.

The indenonaphthopyran compound preferably includes a compound shown in the following formula (16).

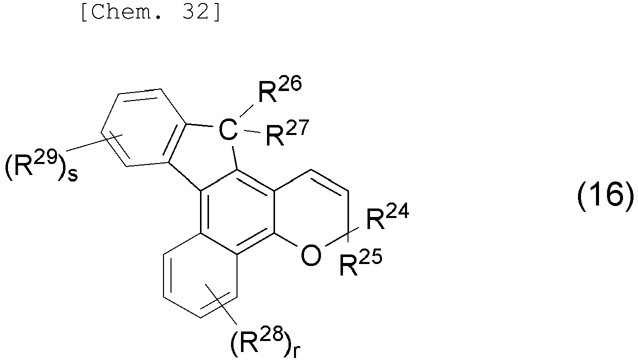

In the formula (16), R²⁴, R²⁵, R²⁶, and R²⁷ are the same as defined above.

r is an integer of 0 to 4.
s is an integer of 0 to 4. When r is 2 to 4, a plurality of R²⁸ may be the same as or different from each other. When s is 2 to 4, a plurality of R²⁹ may be the same as or different from each other. Furthermore, when r is 2 to 4 and adjacent R²⁸ exist, the two adjacent R²⁸ together and a carbon atom bonded to the R²⁸ may form a ring that may include at least one kind of heteroatom selected from the group consisting of an oxygen atom, a carbon atom, a sulfur atom, and a nitrogen atom, and furthermore, the ring may have a substituent. Furthermore, when s is 2 to 4 and adjacent R²⁹ exist, the two adjacent R²⁹ together and a carbon atom bonded to the R²⁹ may form a ring that may include at least one kind of heteroatom selected from the group consisting of an oxygen atom, a carbon atom, a sulfur atom, and a nitrogen atom, and furthermore, the ring may have a substituent.

R²⁸ and R²⁹ are each independently a group represented by the formula (15), a hydroxyl group, an alkyl group, a haloalkyl group, a cycloalkyl group optionally having a substituent, an alkoxy group, an amino group, a substituted amino group, a heterocyclic group optionally having a substituent, a cyano group, a halogen atom, an alkylthio group, an arylthio group optionally having a substituent, a nitro group, a formyl group, a hydroxycarbonyl group, an alkylcarbonyl group, an alkoxycarbonyl group, an aralkyl group optionally having a substituent, an aralkoxy group optionally having a substituent, an aryloxy group optionally having a substituent, an aryl group optionally having a substituent, a heteroaryl group optionally having a substituent, a thiol group, an alkoxyalkylthio group, a haloalkylthio group, or a cycloalkylthio group optionally having a substituent, a silyl group optionally having a substituent, an oxysilyl group optionally having a substituent, a group represented by the following formula (17), or a group represented by L-R⁴⁰⁰.

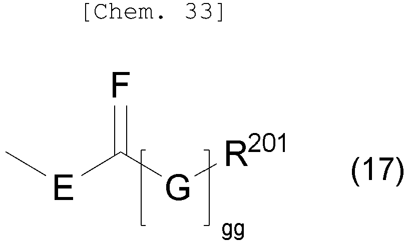

In the formula (17), E is an oxygen atom or NR¹⁰¹, and R¹⁰¹ is a hydrogen atom or an alkyl group. F is an oxygen atom or a sulfur atom. G is an oxygen atom, a sulfur atom, or NR²⁰². R²⁰² is a hydrogen atom, an alkyl group, a cycloalkyl group, an aryl group, or a heteroaryl group.
gg is an integer of 0 or 1. R²⁰¹ is a hydrogen atom, an alkyl group, a cycloalkyl group, an aryl group, or a heteroaryl group. When G is an oxygen atom or a sulfur atom, R²⁰¹ is a group other than a hydrogen atom.

R⁴⁰⁰ is a hydrogen atom, an alkyl group, an aryl group, a silyl group having a substituent, a polymerizable group, or a photochromic group. The substituent of the silyl group is an alkyl group, an alkoxyl group, or an aryl group. L is a group represented by the following formula (X2).

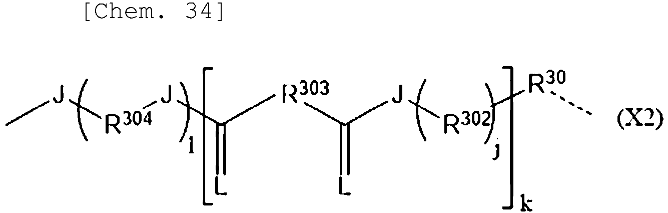

In the formula (X2), R³⁰ is a group represented by the following formula (X2a).

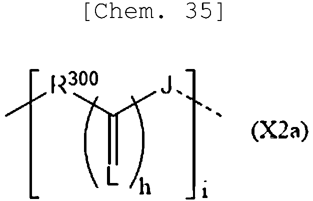

In the formulae (X2) and (X2a), J is a divalent group, each independently is a direct bond, a substituted methylene group, an oxygen atom, a sulfur atom, or NR³⁰¹. R³⁰¹ is a hydrogen atom or an alkyl group. L in the formulae (X2) and (X2a) is an oxygen atom or a sulfur atom. R³⁰⁰ is an alkylene group, or a silylene group having an alkyl group or an aryl group as a substituent. R³⁰², R³⁰³, and R³⁰⁴ are an alkylene group.
h, j, k, and l are 0 or 1.
i is an integer of 1 to 200. When i is 2 or more, a plurality of R³⁰ may be the same as or different from each other. The dashed line represents a bond with R⁴⁰⁰.

### <Other additives>

The curable composition may include various known compounding agents. The compounding agents include, for example, various stabilizers such as a mold release agent, an ultraviolet absorber, an infrared absorber, an ultraviolet stabilizer, an antioxidant, a coloring inhibitor, an antistatic agent, a fluorescent dye, a dye, a pigment, and a perfume. Furthermore, a solvent and a leveling agent may also be added. Thiols such as t-dodecyl mercaptan may be added as a polymerization regulator.

As the ultraviolet stabilizer, a hindered amine light stabilizer, a hindered phenol antioxidant, or a sulfur-based antioxidant can be suitably used. The hindered amine light stabilizer is not particularly limited, but bis(1,2,2,6,6-pentamethyl-4-piperidyl)sebacate is particularly preferable in terms of preventing deterioration of the photochromic compound. Furthermore, the hindered amine light stabilizers commercially available from ADEKA Corporation under the trade names Adekastab LA-52, LA-57, LA-62, LA-63, LA-67, LA-77, LA-87, and the like, can also be preferably used.

Examples of the hindered phenol antioxidants include 2,6-di-t-butyl-4-methyl-phenol, IRGANOX 245 manufactured by BASF Japan Ltd.: ethylene bis(oxyethylene)bis[3,5-tert-butyl-4-hydroxy-m-tolyl]propionate], IRGANOX 1076 manufactured by BASF Japan Ltd.: octadecyl-3-(3,5-di-tert-butyl-4-hydroxyphenyl)propionate, IRGANOX 1010 manufactured by BASF Japan Ltd.: pentaerythritol tetrakis [3-(3,5-di-tert-butyl-4-hydroxyphenyl)propionate], and other examples including IRGANOX 1035, 1075, 1098, 1135, 1141, 1222, 1330, 1425, 1520, 259, 3114, 3790, 5057, 565, and the like, manufactured by BASF Japan Ltd.

Polymerization initiators include thermal polymerization initiators and photopolymerization initiators. Specific examples thereof are as follows.

Thermal polymerization initiators include:
diacyl peroxide; benzoyl peroxide, p-chlorobenzoyl peroxide, decanoyl peroxide, lauroyl peroxide, acetyl peroxide,
peroxy esters: t-butyl peroxy-2-ethylhexanate, t-butyl peroxy neodecanate, cumyl peroxy neodecanate, t-butyl peroxy benzoate,
percarbonate; diisopropyl peroxydicarbonate, di-sec-butyl peroxydicarbonate,
azo compound; azobisisobutyronitrile,
and the like.

Photopolymerization initiators include:
acetophenone compounds: 1-phenyl-2-hydroxy-2-methylpropan-1-one, 1-hydroxycyclohexyl phenyl ketone, 1-(4-isopropylphenyl)-2-hydroxy-2-methylpropan-1-one,
α-dicarbonyl compounds: 1,2-diphenylethanedione, methylphenylglycoxylate,
acylphosphine oxide compounds: 2,6-dimethylbenzoyldiphenylphosphine oxide, 2,4,6-trimethylbenzoyldiphenylphosphine oxide, 2,4,6-trimethylbenzoyldiphenylphosphine acid methyl ester, 2,6-dichlorobenzoyldiphenylphosphine oxide, 2,6-dimethoxybenzoyldiphenylphosphine oxide.

Note here that when a photopolymerization initiator is used, a known polymerization curing accelerator auxiliary such as a tertiary amine can also be used in combination.

Surfactants include known surfactants such as silicone surfactants having a silicone chain (polyalkylsiloxane unit) as the hydrophobic group, and fluorosurfactants having a fluorocarbon chain. When surfactants are used, two or more types may be mixed together.

Specific examples of silicone surfactants and fluorosurfactants that can be suitably used include L-7001, L-7002, L-7604, FZ-2123, and FZ-2110 manufactured by Dow Toray Co., Ltd.; Megafac F-470, Megafac F-1405, and Megafac F-479 manufactured by DIC Corporation; Florad FC-430 manufactured by 3M Japan; TEGORAD 2100 and TEGORAD 2300 manufactured by Evonik Japan Co., Ltd.; BYK-UV3505, BYK-UV3505, BYK-UV3510, BYK-UV3530, BYK-3550, BYK-3560, BYK-UV3565, BYK-3566, BYK-UV3500, BYK-UV3535, BYK-UV3570, BYK-UV3575, and BYK-UV3576 manufactured by BYK Japan KK; KR-513, X-22-2445, X-40-9296, X-22-164, X-22-164A, X-22-164B, X-22-164C, and X-22-164E manufactured by Shin-Etsu Chemical Co., Ltd., and the like.

As the ultraviolet absorber, known ultraviolet absorbers such as a benzophenone-based compound, a benzotriazole-based compound, a cyanoacrylate-based compound, a triazine-based compound, a benzoate-based compound, a cinnamic acid ester-based compound, and an oxanilide-based compounds can be used, and a cyanoacrylate-based compound, a benzophenone-based compound, a benzotriazole-based compound, and a cinnamic acid ester-based compound are particularly preferable.

### <Cured body>

A cured body is obtained by curing a curable composition. The curing of the curable composition is carried out by inducing a radical polymerization reaction by irradiation with active energy rays such as ultraviolet rays, α rays, β rays, γ rays, and LEDs, by heat, or by a combination of both. In other words, appropriate curing methods may be employed depending on the type of polymerizable monomer and polymerization curing accelerator used and the form of the cured body to be formed. When the laminate is formed by a coating method described later, it is preferable to employ photopolymerization because a uniform film thickness can be obtained.

In thermally polymerizing a curable composition in which a polymerizable compound is blended, the thermal polymerization temperature affects the properties of the resulting cured body. The temperature conditions cannot be generally determined because they are affected by the type and amount of the thermal polymerization initiator and the type of polymerizable compound, but in general, a method of starting polymerization at relatively low temperature and slowly increasing the temperature is suitable. Similar to the temperature, the polymerization time also varies depending on various factors, so it is preferable to determine the optimal time in advance based on these conditions, and it is generally preferable to select conditions so that the polymerization is completed within 2 to 48 hours. When a photochromic laminate sheet is obtained, polymerization is carried out at a temperature at which the reaction between polymerizable functional groups proceeds. In this case, it is preferable to determine the optimal temperature and time to achieve the desired molecular weight.

In addition, when a curable composition is photopolymerized, among the polymerization conditions, in particular, UV intensity affects the properties of the obtained photochromic cured body. The illuminance conditions cannot be generally determined because they are affected by the type and amount of the photopolymerization initiator and the type of the polymerizable monomer, and it is generally preferable to select conditions such as irradiation with UV light of 50 to 500 mW/cm² at a wavelength of 365 nm for 0.5 to 5 minutes.

The biomass plastic content of the cured body is preferably 25% by mass or more. The biomass plastic content can be calculated using a method conforming to ISO standard 16620-3. The biomass plastic content of the cured body is preferably 30% by mass or more, and more preferably 40% by mass or more. The biomass plastic content does not have a particular upper limit, but according to one example, is 100% by mass or less.

### <Laminate>

The laminate according to the embodiment includes an optical base material and a resin layer including the cured body according to the embodiment. The laminate according to the embodiment may include an optical base material, a primer layer including a urethane resin, and a resin layer including the cured body according to the embodiment laminated on the primer layer.

The optical base material includes, for example, a resin such as a diallyl carbonate resin, a urethane resin, a thiourethane resin, or the like. The optical base material may be derived from a plant raw material or from a petroleum raw material. The optical base material can be a lens base material. A primer layer may be provided between the laminate and the cured body. The primer layer includes a urethane resin.

The biomass plastic content of the optical base material is preferably 25% by mass or more. The biomass plastic content can be calculated using a method conforming to ISO standard 16620-3. The biomass plastic content of the optical base material is preferably 30% by mass or more, and more preferably 40% by mass or more. The biomass plastic content does not have a particular upper limit, but according to one example, the upper limit is 100% by mass or less.

FIG. 1 is a sectional view schematically showing an example of a laminate according to an embodiment. The laminate 10 shown in FIG. 1 includes an optical base material 11, a primer layer 1 provided on one main surface of the optical base material 11, and a functional resin layer 12 provided on the main surface of the primer layer 1. The functional resin layer 12 includes a cured body according to an embodiment. The optical base material 11 is a convex meniscus lens having a concavo-convex shape.

### <Optical article>

The cured body according to the embodiment can be widely used as an optical article, for example, various memory materials such as various memory materials replacing silver halide photosensitive materials, copying materials, printing photoreceptors, cathode ray tube memory materials, laser photosensitive materials, and holography photosensitive materials, and lenses. Lenses are suitable for glasses. The photochromic cured body including a photochromic compound can also be used as a photochromic lens material, an optical filter material, a display material, an actinometer material, a decoration material and the like.

The cured body according to the embodiment is particularly suitable for use in photochromic lenses. Photochromic lenses are suitable as lenses for glasses such as sunglasses. Methods for manufacturing a photochromic lens can be any known methods as long as the method can provide uniform photochromatic performance.

When photochromic properties are exhibited by a kneading method, the above-mentioned curable composition is injected between glass molds held by elastomer gaskets or spacers, followed by cast polymerization with heat in an air furnace or by irradiation with active energy rays such as ultraviolet rays depending on the type of the polymerizable compound and the polymerization curing accelerator, thereby obtaining a photochromic cured body molded into a form of an optical material such as a lens.

When photochromic properties are exhibited by the lamination method, a photochromic layer including a photochromic cured body is formed on the surface of the optical base material by dissolving the curable composition in an appropriate organic solvent to prepare a coating liquid, applying the coating liquid on the surface of an optical base material such as a lens base material by spin coating, dipping, or the like, drying to remove the organic solvent, and then performing polymerization and curing by UV irradiation or heating or the like in an inert gas such as nitrogen (coating method). The curable composition according to the embodiment is particularly suitable for the coating method.

Furthermore, a photochromic layer made of a photochromic cured body can be formed on the surface of the optical base material also by cast polymerization by inner mold, in which an optical substrate such as lens base material is placed to face a glass mold so that a predetermined gap is formed, a curable composition is injected into the gap, and in this state, polymerization and curing are carried out by UV irradiation, by heating, and the like (cast polymerization method).

When a photochromic layer is formed on the surface of an optical base material by the lamination methods (coating method and cast polymerization method) described above, the adhesion between the photochromic layer and the optical base material can be enhanced by previously subjecting the surface of the optical base material to chemical treatment with an alkaline solution, an acid solution, and the like, or physical treatment by corona discharging, plasma discharging, polishing, and the like. Of course, it is also possible to provide a transparent adhesive resin layer on the surface of the optical base material.

A protective layer can be laminated on the surface of the formed photochromic layer as necessary. The protective layer can be made of general resins such as urethane resin, epoxy resin, (meth)acrylic resin, and polyvinyl alcohol, without any particular restrictions. Providing a protective layer can increase the weather resistance and hardness of the photochromic layer.

Furthermore, the cured body formed of a curable composition may be subjected to post-processing depending on its application of use. Examples of the post-processing include dyeing using a dye such as a disperse dye, forming a hard coat film using a hard coat agent mainly composed of a sol of a silane coupling agent or silicon, zirconium, antimony, aluminum, tin, tungsten, and the like, forming a thin film by vapor deposition of a metal oxide such as SiO₂, TiO₂, and ZrO₂, anti-reflection treatment using a thin film by coating an organic polymer, anti-static treatment, and the like.

### <Photochromic optical article>

When photochromic optical articles according to the embodiment are measured according to Japanese Industrial Standard T7333, the photochromic optical article has a luminous transmittance of 12% or less at the time of color development in a 23°C atmosphere, a difference in luminous transmittance at the time of color development in an atmosphere at 23°C and an atmosphere at 35°C is within 12%, and the time required for the luminous transmittance to reach 70% at the time of fading is within 400 seconds.

The luminous transmittance at the time of color development in an atmosphere at 23°C is preferably 11% or less, and more preferably 10% or less. From the viewpoint of visibility, the lower limit of the luminous transmittance is preferably 8% or more.

The difference in the luminous transmittance at the time of color development between 23°C atmosphere and 35°C atmosphere is preferably 10% or less, and more preferably 8% or less. The luminous transmittance does not have a particular lower limit, but is 0% or more in one example, and 5% or more in another example.

The time required for the luminous transmittance to reach 70% at the time of fading is preferably within 300 seconds, and more preferably within 200 seconds. This time does not have a particular lower limit, but, from the viewpoint of visibility, the lower limit is 50 seconds or more in one example, and 100 seconds or more in another example.

The photochromic optical article can be, for example, a laminate or an optical article according to the embodiment.

### EXAMPLES

Next, the present invention will be described in detail with reference to examples and comparative examples, but the present invention is not limited to these examples. Notation of each component and the evaluation method are as follows.

### <Each component>

### First (meth)acrylate

TMPT-20E: Ethoxylated trimethylolpropane trimethacrylate (number average molecular weight 1218)
Gly-20E: Ethoxylated glycerin trimethacrylate (number average molecular weight 1176)
TMMT-35E: Ethoxylated pentaerythritol tetramethacrylate (number average molecular weight 1948)

### Second (meth)acrylate

M-PTMG85: Polytetramethylene glycol dimethacrylate (number average molecular weight 986)
M-PTMG100: Polytetramethylene glycol dimethacrylate (number average molecular weight 1136)
M-PTMG130: Polytetramethylene glycol dimethacrylate (number average molecular weight 1436)
M-EGTME: Dimethacrylate of the following formula (number average molecular weight 1762)

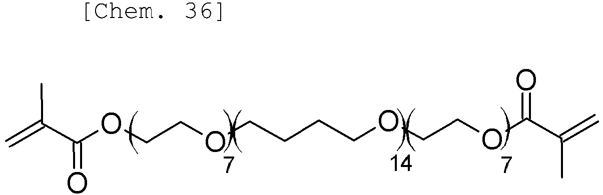

M-PTMG100-B: Polytetramethylene glycol dimethacrylate obtained from plant-derived polytetramethylene glycol with a biomass content of 95% by mass (number average molecular weight 1136, biomass content 83.6% by mass)
M-EGPG: Dimethacrylate of the following formula (number average molecular weight 1120)

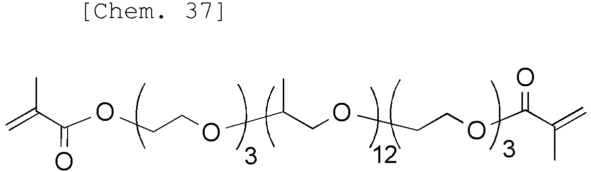

### Third (meth)acrylate

TMPT: Trimethylolpropane trimethacrylate (molecular weight 338)

### Fourth (meth)acrylate

14G: Polyethylene glycol dimethacrylate (number average molecular weight 770)
APC56: Diacrylate obtained by acrylating polycarbonate diol obtained by phosgenation of pentamethylene glycol and hexamethylene glycol (number average molecular weight 606)
M-PTMG65: Polytetramethylene glycol dimethacrylate (number average molecular weight 786)
M-NPG: Neopentyl glycol dimethacrylate
A-PPG12: Polypropylene glycol diacrylate (number average molecular weight 822)

### Fifth (meth)acrylate

TSL: γ-methacryloyloxypropyltrimethoxysilane
LA82: 1,2,2,6,6-pentamethyl-4-piperidyl methacrylate

Photochromic compound
PC1: A compound represented by the following formula.

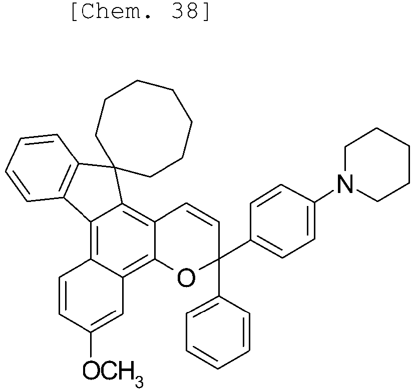

PC2: A compound represented by the following formula. In the formula, "Me" represents a methyl group.

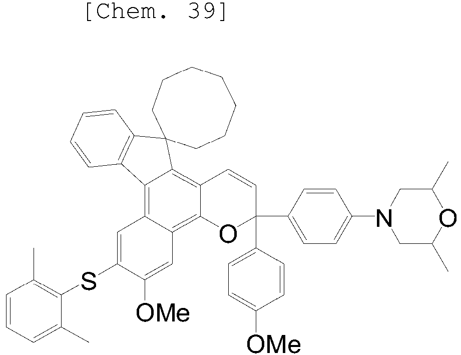

PC3: A compound represented by the following formula. In the formula, "Me" represents a methyl group.
"Pr" represents a normal propyl group.

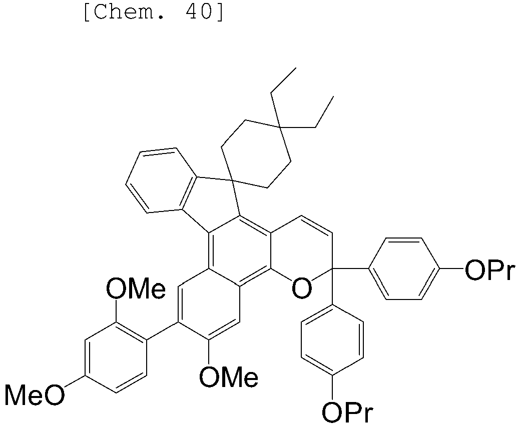

PC4: A compound represented by the following formula.

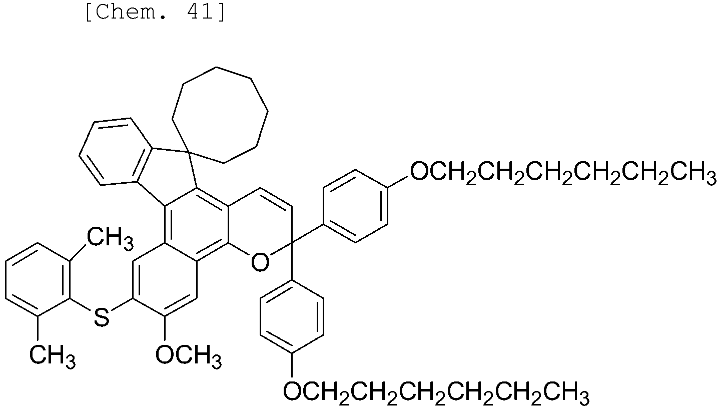

PC5: A compound represented by the following formula.

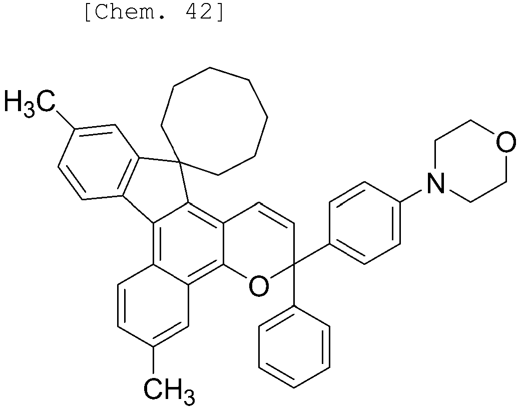

PC6: A compound represented by the following formula.

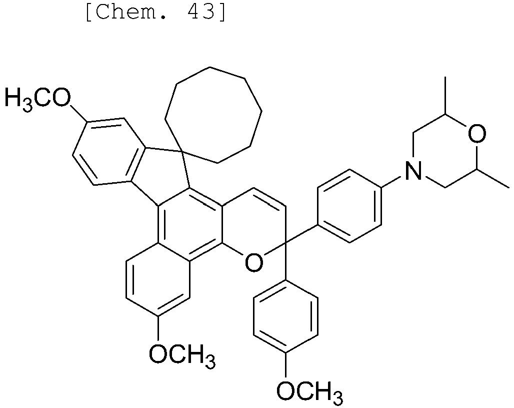

### Other compounding agents

### (Stabilizer)

HALS: bis(1,2,2,6,6-pentamethyl-4-piperidyl)sebacate HP: ethylene bis(oxyethylene)bis[3-(5-tert-butyl-4-hydroxy-m-tolyl)propionate] (manufactured by BASF Japan, Irganox 245).

### (Photopolymerization initiator)

PI: Phenylbis(2,4,6-trimethylbenzoyl)-phosphine oxide (manufactured by IGM, Omnirad 819)

### (Leveling Agent)

L-7001 manufactured by Dow Toray Co., Ltd.

### <Example 1>

### (Manufacture of photochromic curable composition)

The first and second methacrylates were mixed uniformly according to the following formulation.
First methacrylate: TMPT-20E, 1.0 g
Second methacrylate: M-PTMG100, 9.0 g

The following components were further added to the resulting mixture, and the mixture was stirred at 60°C for 1 hour to obtain a homogeneous solution.
Photochromic compound: PC1 0.04 g/PC2 0.11 g/PC3 0.17 g/PC4 0.08 g/PC5 0.03 g/PC6 0.02 g
Polymerization initiator: PI1 0.03 g
Stabilizer: HP 0.05 g/HALS: 0.3 g
Fifth methacrylate: TSL 0.6 g
To the solution, 1000 ppm of a leveling agent L-7001 was added and mixed to obtain a photochromic curable composition.

### (Manufacture of optical articles)

The obtained photochromic curable composition was used to obtain a photochromic laminate by the following lamination method.

Firstly, a thiourethane plastic lens with a center thickness of 2 mm and a refractive index of 1.60 was prepared as the optical base material. Note here that this thiourethane plastic lens was previously subjected to alkaline etching at 50°C for 5 minutes using a 5% aqueous solution of sodium hydroxide, and was then thoroughly washed with distilled water.

Using a spin coater (1H-DX2, manufactured by MIKASA), a moisture-curable primer (product name; TR-SC-P, manufactured by Tokuyama Corporation) was held on the surface of the above-mentioned plastic lens at a rotation speed of 200 rpm for 10 seconds, then held at 1000 rpm for 5 seconds, and dried at 23°C for 10 minutes to obtain a 7.5-µm primer layer. Thereafter, using the similar spin coater, 2 g of the photochromic curable composition obtained above was supplied onto the lens on which the primer layer was formed, and the rotation speed was held at 100 rpm for 20 seconds to spread the photochromic curable composition, and then held at 800 rpm for 5 seconds. Next, the lens on which the photochromic curable composition was applied on the surface was irradiated with light for 40 seconds using a metal halide lamp with an output of 200 mW/cm² in a nitrogen gas atmosphere to cure the coating, and a 40-µm photochromic layer was obtained. Thereafter, heating was further carried out at 90°C for 1 hour to obtain a photochromic laminate including a photochromic layer.

### (Examples 2 to 28 and Comparative Examples 1 to 7)

Photochromic cured bodies were produced in a similar manner to Example 1 except that the types and amounts of the first to fifth (meth)acrylates were changed as shown in Table 1, and evaluated according to the similar evaluation criteria.

### (Example 29)

A photochromic cured body was produced in a similar manner to Example 1 except that the second (meth)acrylate was changed to M-PTMG100-B, and evaluated according to the similar evaluation criteria. Furthermore, the biomass plastic content of the obtained cured body was calculated based on ISO standard 16620-3 and was 65.8% by mass. Calculation: 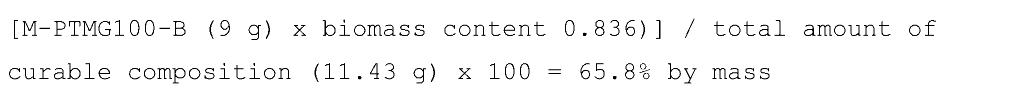 [M-PTMG100-B (9 g) x biomass content 0.836)] / total amount of curable composition (11.43 g) x 100 = 65.8% by mass

### (Examples 30 to 38)

Photochromic cured bodies were produced in a similar manner to Example 1 except that no HALS as stabilizer was used and the types and amounts of the first to fifth (meth)acrylates were changed as shown in Table 2, and evaluated according to the similar evaluation criteria.

### <Evaluation method>

The obtained photochromic laminate was evaluated by the following method.

### (1) Photochromic properties

### [1] Maximum absorption wavelength (λmax (nm)):

A maximum absorption wavelength was obtained after color development by a spectrophotometer (instantaneous multichannel photodetector MCPD3000) manufactured by Otsuka Electronics Co., Ltd. and used as an indicator of the color tone at the time of color development.

### [2] Color developing density at 23°C (A₂₃)

A difference between the absorbance {ε(300)} after light irradiation at 23°C for 300 seconds and the absorbance ε(0) before light irradiation in the maximum absorption wavelength was defined as an indicator of the color developing density. It can be said that the higher the value, the better the photochromic properties.

### [3] Fading half-life at 23°C [τ1/2 (sec.)]:

A time required for the absorbance of the sample at the maximum absorption wavelength to decrease to 1/2 of {ε(300) - ε(0)} when light irradiation at 23°C for 300 seconds was stopped was defined as an indicator of the fading speed. The shorter this time, the higher the fading speed.

### [4] Luminous transmittance at 23°C (T₂₃ (%))

Luminous transmittance after 300 seconds of light irradiation at 23°C, measured using a spectrophotometer (instantaneous multichannel photodetector MCPD3000) manufactured by Otsuka Electronics Co., Ltd. It can be said that the lower this value, the more excellent the photochromic properties.

### [5] Luminous transmittance at 35°C (T₃₅ (%))

Luminous transmittance after 300 seconds of light irradiation at 35°C, measured using a spectrophotometer (instantaneous multichannel photodetector MCPD3000) manufactured by Otsuka Electronics Co., Ltd. It can be said that the lower this value, the more excellent the photochromic properties.

### [6] Luminous transmittance difference

A difference between the value of the 23°C luminous transmittance measured in [4] and the value of the 35°C luminous transmittance measured in [5]. It can be said that the smaller the difference, the less susceptible to the effects of temperature and the more excellent the photochromic properties.

### [7] Fading speed at 23°C (T70% (sec.))

Time required for the luminous transmittance of a sample to reach 70% after 300 seconds of light irradiation at 23°C and then stopping the light irradiation. It can be said that the shorter this time, the faster the fading speed and the more excellent the photochromic properties.

### (2) Appearance evaluation

The photochromic laminate was allowed to transmit light of a fluorescent lamp in a black box, and the appearance was evaluated according to the following criteria. A: No appearance defects are observed. B: Wrinkle defects due to uneven shrinkage occurred in part of lens periphery in 1 to 2 lenses of 10 lenses. C: Wrinkle defects due to uneven shrinkage occurred in part of lens periphery in 5 or more lenses out of 10 lenses. D: Wrinkle defects due to uneven shrinkage occurred all around the periphery of lens. E: Wrinkle defects due to uneven shrinkage occurred at peripheral edge of lens, and partial peeling of a photochromic layer occurred. F: Wrinkle defects occur all over lens.

### (3) Storage stability of photochromic curable composition

Evaluation was carried out for time and temperature at which the obtained photochromic curable composition was able to be stably stored in a uniform state. A: A uniform state can be kept for one month or more at a storage temperature of 25°C. Even when a curable composition is frozen at -20°C and then thawed, the uniform state can be kept. B: A uniform state can be kept for one month or more at a storage temperature of 25°C. When a curable composition is frozen at -20°C and then thawed, turbid occurs in part. C: A uniform state can be kept for one month or more at storage temperature of 25°C. When a curable composition is frozen at -20°C and then thawed, layer separation occurs. D: Layer separation occurs within one month when stored at 25°C.

### [Table 1]

**Table 1**

| | First (meth)acrylate | Second (meth)acrylate | Third (meth)acrylate | Fourth (meth)acrylate | Fifth (meth)acrylate | M1 / M2 |
|---|---|---|---|---|---|---|
| Example 1 | TMPT-20E (10) | M-PTMG100 (90) | - | - | TSL (6) | 0.11 |
| Example 2 | TMPT-20E (20) | M-PTMG100 (80) | - | - | TSL (6) | 0.25 |
| Example 3 | TMPT-20E (22.5) | M-PTMG100 (77.5) | - | - | TSL (6) | 0.29 |
| Example 4 | TMPT-20E (30) | M-PTMG100 (70) | - | - | TSL (6) | 0.43 |
| Example 5 | TMPT-20E (40) | M-PTMG100 (60) | - | - | TSL (6) | 0.67 |
| Example 6 | TMPT-20E (50) | M-PTMG100 (50) | - | - | TSL (6) | 1.00 |
| Example 7 | TMPT-20E (60) | M-PTMG100 (40) | - | - | TSL (6) | 1.50 |
| Example 8 | TMPT-20E (25) | M-PTMG100 (70) | TMPT (5) | - | TSL (6) | 0.36 |
| Example 9 | TMPT-20E (25) | M-PTMG100 (65) | TMPT (10) | - | TSL (6) | 0.38 |
| Example 10 | TMPT-20E (25) | M-PTMG100 (50) | TMPT (25) | - | TSL (6) | 0.42 |
| Example 11 | TMPT-20E (25) | M-PTMG100 (35) | TMPT (40) | - | TSL (6) | 0.71 |
| Example 12 | TMPT-20E (30) | M-PTMG100 (62.5) | TMPT (7.5) | - | TSL (6) | 0.48 |
| Example 13 | TMPT-20E (40) | M-PTMG100 (52.5) | TMPT (7.5) | - | TSL (6) | 0.76 |
| Example 14 | TMPT-20E (50) | M-PTMG100 (42.5) | TMPT (7.5) | - | TSL (6) | 1.18 |
| Example 15 | TMPT-20E (25) | M-PTMG100 (35) | TMPT (40) | - | TSL (6) | 0.71 |
| Example 16 | TMPT-20E (30) | M-PTMG100 (30) | TMPT (40) | - | TSL (6) | 1.00 |
| Example 17 | TMPT-20E (40) | M-PTMG100 (20) | TMPT (40) | - | TSL (6) | 2.00 |
| Example 18 | TMPT-20E (25) | M-PTMG85 (35) | TMPT (40) | - | TSL (6) | 0.71 |
| Example 19 | TMPT-20E (25) | M-PTMG130 (35) | TMPT (40) | - | TSL (6) | 0.71 |
| Example 20 | TMPT-20E (25) | M-EGTME (35) | TMPT (40) | - | TSL (6) | 0.71 |
| Example 21 | Gly-20E (25) | M-PTMG100 (35) | TMPT (40) | - | TSL (6) | 0.71 |
| Example 22 | TMMT-35E (25) | M-PTMG100 (35) | TMPT (40) | - | TSL (6) | 0.71 |
| Example 23 | TMPT-20E (25) | M-PTMG100 (35) | TMPT (30) | APC56 (10) | TSL (6) | 0.71 |
| Example 24 | TMPT-20E (20) | M-PTMG100 (30) | TMPT (30) | APC56 (20) | TSL (6) | 0.67 |
| Example 25 | TMPT-20E (25) | M-PTMG100 (35) | TMPT (30) | M-NPG (10) | TSL (6) | 0.71 |
| Example 26 | TMPT-20E (40) | M-PTMG100 (52.5) | TMPT (7.5) | - | TSL (3) | 0.76 |
| | | | | | LA82 (3) | |
| Example 27 | TMPT-20E (25) | M-PTMG100 (35) | TMPT (40) | - | TSL (3) | 0.71 |
| | | | | | LA82 (3) | |
| Example 28 | TMPT-20E (25) | M-PTMG100 (35) | TMPT (30) | APC56 (10) | TSL (3) | 0.71 |
| | | | | | LA82 (3) | |
| Example 29 | TMPT-20E (10) | M-PTMG-100-B (90) | - | - | TSL (6) | 0.11 |

### [Table 2]

**Table 2**

| | First (meth)acrylate | Second (meth)acrylate | Third (meth)acrylate | Fourth (meth)acrylate | Fifth (meth)acrylate | M1 / M2 |
|---|---|---|---|---|---|---|
| Example 30 | TMPT-20E (45) | M-PTMG100 (45) | | | TSL (6) | 0.82 |
| | | M-EGPG (10) | - | - | LA82 (8) | |
| Example 31 | TMPT-20E (45) | M-PTMG100 (45) | | | TSL (6) | 0.82 |
| | | M-EGPG (10) | - | - | LA82 (10) | |
| Example 32 | TMPT-20E (45) | M-PTMG100 (45) | | | TSL (6) | 0.82 |
| | | M-EGPG (10) | - | - | LA82 (12.5) | |
| Example 33 | TMPT-20E (42.5) | M-PTMG100 (42.5) | - | - | TSL (6) | 0.74 |
| | | M-EGPG (15) | | | LA82 (10) | |
| Example 34 | TMPT-20E (45) | M-PTMG100 (45) | - | A-PPG12 (10) | TSL (6) | 1.00 |
| | | | | | LA82 (10) | |
| Example 35 | TMPT-20E (42.5) | M-PTMG100 (42.5) | | A-PPG12 (15) | TSL (6) | 1.00 |
| | | | - | | LA82 (10) | |
| Example 36 | TMPT-20E (25) | M-PTMG100 (40) | TMPT (25) | APC56 (10) | TSL (6) | 0.63 |
| | | | | | LA82 (5) | |
| Example 37 | TMPT-20E (25) | M-PTMG100 (40) | TMPT (25) | | TSL (6) | 0.50 |
| | | M-EGPG (10) | | - | LA82 (5) | |
| Example 38 | TMPT-20E (25) | M-PTMG100 (30) | TMPT (25) | APC56 (10) | TSL (6) | 0.63 |
| | | M-EGPG (10) | | | LA82 (5) | |
| Comparative Example 1 | TMPT-20E (100) | - | - | - | TSL (6) | - |
| Comparative Example 2 | - | M-PTMG100 (100) | - | - | TSL (6) | - |
| Comparative Example 3 | - | M-PTMG100 (75) | | 14G (25) | TSL (6) | - |
| Comparative Example 4 | - | M-PTMG100 (75) | TMPT (25) | - | TSL (6) | - |
| Comparative Example 5 | TMPT-20E (25) | - | TMPT (40) | M-PTMG65 (35) | TSL (6) | - |
| Comparative Example 6 | TMPT-20E (75) | - | TMPT (25) | - | TSL (6) | - |
| Comparative Example 7 | - | - | TMPT (65) | M-PTMG65 (35) | TSL (6) | - |

In Tables 1 and 2, the numbers in parentheses indicate parts by mass of each (meth)acrylate.

### [Table 3]

**Table 3**

| | Photochromic properties | | | | | | | Appearance | Measurement impossible due to overall defect |
|---|---|---|---|---|---|---|---|---|---|
| | Maximum absorption wavelength (nm) | Color developing density at 23°C A²³ (-) | Fading half-life at 23°C τ1/2 (Second) | Fading speed at 23°C T70% (Second) | Luminous transmittance at the time of color development at 23°C T²³(%) | Luminous transmittance at the time of color development at 35°CT³⁵ (%) | Luminous transmittance difference (%) | | |
| Example 1 | 573 | 1.2 | 54 | 217 | 9.9 | 21.5 | 11.6 | D | D |
| Example 2 | 572 | 1.2 | 54 | 219 | 9.8 | 21.3 | 11.5 | D | D |
| Example 3 | 574 | 1.2 | 54 | 217 | 9.8 | 21.3 | 11.5 | C | D |
| Example 4 | 573 | 1.2 | 53 | 215 | 9.8 | 21.4 | 11.6 | C | D |
| Example 5 | 574 | 1.2 | 54 | 220 | 9.7 | 21.1 | 11.4 | C | D |
| Example 6 | 573 | 1.2 | 55 | 225 | 9.7 | 21 | 11.3 | C | D |
| Example 7 | 572 | 1.2 | 57 | 240 | 9.6 | 21 | 11.4 | D | D |
| Example 8 | 572 | 1.2 | 56 | 248 | 9.7 | 21.2 | 11.5 | C | C |
| Example 9 | 573 | 1.2 | 58 | 270 | 9.6 | 21 | 11.4 | C | B |
| Example 10 | 571 | 1.2 | 66 | 305 | 9.4 | 20.5 | 11.1 | B | A |
| Example 11 | 573 | 1.2 | 72 | 335 | 9.4 | 20.2 | 10.8 | B | A |
| Example 12 | 572 | 1.2 | 58 | 229 | 9.7 | 21.2 | 11.5 | B | C |
| Example 13 | 573 | 1.2 | 59 | 229 | 9.6 | 21.2 | 11.6 | B | C |
| Example 14 | 572 | 1.2 | 60 | 237 | 9.6 | 21 | 11.4 | B | C |
| Example 15 | 573 | 1.2 | 72 | 335 | 9.4 | 20.2 | 10.8 | B | A |
| Example 16 | 572 | 1.2 | 78 | 355 | 9.3 | 20.1 | 10.8 | B | A |
| Example 17 | 573 | 1.2 | 82 | 370 | 9.3 | 20.1 | 10.8 | C | A |
| Example 18 | 572 | 1.2 | 75 | 350 | 9.3 | 19.9 | 10.6 | B | A |
| Example 19 | 572 | 1.2 | 71 | 330 | 9.3 | 20.3 | 11.0 | B | A |
| Example 20 | 573 | 1.2 | 70 | 320 | 9.2 | 20.5 | 11.3 | B | A |
| Example 21 | 573 | 1.2 | 71 | 325 | 9.4 | 20.1 | 10.7 | B | A |
| Example 22 | 574 | 1.2 | 70 | 320 | 9.3 | 20.5 | 11.2 | B | A |
| Example 23 | 572 | 1.2 | 70 | 315 | 9.9 | 21.4 | 11.5 | A | A |
| Example 24 | 573 | 1.1 | 68 | 315 | 10.2 | 21.8 | 11.6 | A | A |
| Example 25 | 574 | 1.2 | 75 | 345 | 9.4 | 20.2 | 10.8 | B | A |
| Example 26 | 574 | 1.2 | 60 | 235 | 9.5 | 21.1 | 11.6 | B | B |
| Example 27 | 572 | 1.2 | 73 | 340 | 9.4 | 20.3 | 10.9 | B | A |
| Example 28 | 573 | 1.2 | 71 | 320 | 9.8 | 21.3 | 11.5 | A | A |
| Example 29 | 573 | 1.2 | 54 | 215 | 9.8 | 21.4 | 11.6 | D | D |

### [Table 4]

**Table 4**

| | Photochromic properties | | | | | | | Appearance | Measurement impossible due to overall defect |
|---|---|---|---|---|---|---|---|---|---|
| | Maximum absorption wavelength (nm) | Color developing density at 23°C A²³ (-) | Fading half-life at 23°C τ1/2 (Second) | Fading speed at 23°C T70% (Second) | Luminous transmittance at the time of color development at 23°C T²³ (%) | Luminous transmittanc e at the time of color development at 35°CT³⁵ (%) | Luminous transmittance difference (%) | | |
| Example 30 | 573 | 1.2 | 57 | 240 | 9.7 | 21 | 11.3 | C | B |
| Example 31 | 572 | 1.2 | 58 | 250 | 9.6 | 21 | 11.4 | C | B |
| Example 32 | 574 | 1.2 | 59 | 255 | 9.6 | 21 | 11.4 | C | A |
| Example 33 | 573 | 1.2 | 59 | 255 | 9.6 | 21.1 | 11.5 | B | A |
| Example 34 | 574 | 1.1 | 59 | 260 | 9.8 | 21.5 | 11.7 | B | B |
| Example 35 | 573 | 1.1 | 60 | 265 | 10 | 21.8 | 11.8 | B | A |
| Example 36 | 573 | 1.2 | 72 | 330 | 9.9 | 21.4 | 11.5 | A | A |
| Example 37 | 573 | 1.2 | 73 | 335 | 9.3 | 20.2 | 10.9 | A | A |
| Example 38 | 572 | 1.2 | 72 | 330 | 9.8 | 21.2 | 11.4 | A | A |
| Comparative Example 1 | Measurement impossible due to overall defect | | | | | | | F | A |
| Comparative Example 2 | 571 | 1.2 | 54 | 215 | 10 | 21.5 | 11.5 | E | A |
| Comparative Example 3 | 572 | 1.2 | 56 | 219 | 9.8 | 21.3 | 11.5 | E | D |
| Comparative Example 4 | 571 | 1.2 | 64 | 295 | 9.5 | 20.6 | 11.1 | E | A |
| Comparative Example 5 | 572 | 1.2 | 87 | 410 | 9 | 19.5 | 10.5 | B | A |
| Comparative Example 6 | Measurement impossible due to overall defect | | | | | | | F | A |
| Comparative Example 7 | 572 | 1.2 | 102 | 475 | 9 | 19.6 | 10.6 | C | A |

Preferred embodiments of the present invention are added below.
[1] A curable composition including:
   a functional dye,
   first (meth)acrylate having a number average molecular weight of 850 or more and 3000 or less and having three or more (meth)acryloyl groups; and
   a second (meth)acrylate having a number average molecular weight of 850 or more and having two (meth)acryloyl groups.
[2] The curable composition described in [1], wherein a proportion of the first (meth)acrylate in the curable composition is 20% by mass or more and 60% by mass or less.
[3] The curable composition described in [1] or [2], wherein a proportion of the second (meth)acrylate in the curable composition is 15% by mass or more and 75% by mass or less.
[4] The curable composition described in any one of [1] to [3], wherein a ratio M1/M2 of a mass M1 of the first (meth)acrylate to a mass M2 of the second (meth)acrylate is 0.1 or more and 2.0 or less.
[5] The curable composition described in any one of [1] to [4], wherein the functional dye includes a photochromic compound.
[6] The curable composition described in any one of [1] to [5], wherein the first (meth)acrylate does not include a cyclic structure.
[7] The curable composition described in any one of [1] to [6], wherein the first (meth)acrylate includes (meth)acrylate represented by the following formula (I): 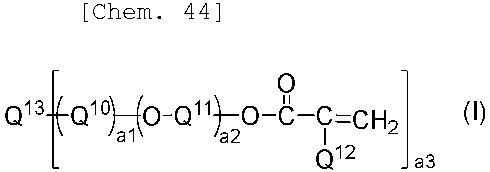 in the formula (I),
   Q¹⁰ is a linear or branched alkylene group having 1 or more and 3 or less carbon atoms,
   Q¹¹ is a linear or branched alkylene group having 1 or more and 10 or less carbon atoms,
   Q¹² is a hydrogen atom or a methyl group,
   Q¹³ is a trivalent to hexavalent organic group having 1 or more and 10 or less carbon atoms,
   a1 is 0 or 1,
   a2 is 3 or more and 15 or less, and
   a3 is 3, 4, 5, or 6.
[8] The curable composition described in any one of [1] to [7], wherein the second (meth)acrylate does not include a cyclic structure.
[9] The curable composition described in any one of [1] to [8], wherein the second (meth)acrylate includes (meth)acrylate represented by the following formula (1): 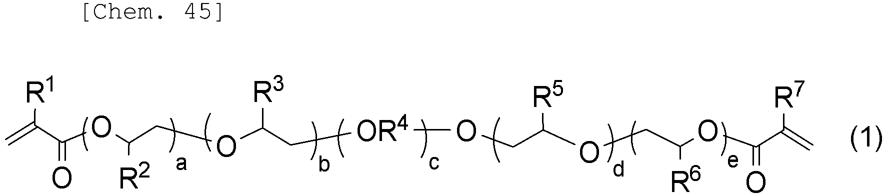 in the formula (1),
   R¹ and R⁷ are each independently a hydrogen atom or a methyl group,
   R² and R⁶ are each independently a hydrogen atom or an alkyl group having 1 or more and 3 or less carbon atoms,
   R³ and R⁵ are each independently a hydrogen atom or an alkyl group having 1 or more and 3 or less carbon atoms,
   R⁴ is a linear or branched alkylene group having 3 or more and 10 or less carbon atoms, which may have a substituent,
   a and e are each independently 0 to 10,
   b and d are each independently 0 to 20,
   c is a number of 2 to 100 and is greater than each of a, b, d, and e.
[10] The curable composition described in any one of [1] to [9], further including a third (meth)acrylate having a number average molecular weight of less than 850 and having three or more (meth)acryloyl groups.
[11] The curable composition described in [10], wherein a proportion of the third (meth)acrylate in the curable composition is 5% by mass or more and 50% by mass or less.
[12] The curable composition described in any one of [1] to [11], further including a fourth (meth)acrylate having a number average molecular weight of less than 850 and two (meth)acryloyl groups.
[13] The curable composition described in [12], wherein a proportion of the fourth (meth)acrylate in the curable composition is 1% by mass or more and 30% by mass or less.
[14] A cured body including the curable composition described in any one of [1] to [13], the curable composition being cured.
[15] A laminate including
   an optical base material, and
   a resin layer including the cured body described in [14].
[16] A laminate including
   an optical base material,
   a primer layer including a urethane resin; and
   a resin layer including the cured body described in [14], the resin layer being laminated on the primer layer.
[17] An optical article including the cured body described in [14].
[18] A lens including the cured body described in [14].
[19] Glasses including the lens described in [18].
[20] The cured body described in [14], wherein a biomass plastic content by a method conforming to ISO standard 16620-3 is 25% by mass or more.
[21] The laminate described in [15] or [16], wherein a biomass plastic content of the optical base material by a method conforming to ISO standard 16620-3 is 25% by mass or more.
[22] A photochromic optical article wherein in measurement by a method according to Japanese Industrial Standard T7333,
   the photochromic optical article has a luminous transmittance of 12% or less at a time of color development in an atmosphere at 23°C, and
   a difference in the luminous transmittance between 23°C atmosphere and 35°C atmosphere at a time of color development is within 12%, and
   time to reach a luminous transmittance of 70% at a time of fading is within 400 seconds.

## Claims

1. A curable composition comprising:
a functional dye;
first (meth)acrylate having a number average molecular weight of 850 or more and 3000 or less and having three or more (meth)acryloyl groups; and
a second (meth)acrylate having a number average molecular weight of 850 or more and having two (meth)acryloyl groups.

2. The curable composition according to claim 1, wherein a proportion of the first (meth)acrylate in the curable composition is 20% by mass or more and 60% by mass or less.

3. The curable composition according to claim 1, wherein a proportion of the second (meth)acrylate in the curable composition is 15% by mass or more and 75% by mass or less.

4. The curable composition according to claim 1, wherein a ratio M1/M2 of a mass M1 of the first (meth)acrylate to a mass M2 of the second (meth)acrylate is 0.1 or more and 2.0 or less.

5. The curable composition according to claim 1, wherein the functional dye comprises a photochromic compound.

6. The curable composition according to claim 1, wherein the first (meth)acrylate does not include a cyclic structure.

7. The curable composition according to claim 1, wherein the first (meth)acrylate comprises (meth)acrylate represented by the following formula (I): 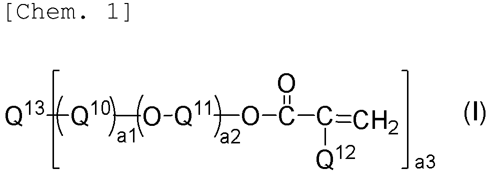 in the formula (I),
Q¹⁰ is a linear or branched alkylene group having 1 or more and 3 or less carbon atoms,
Q¹¹ is a linear or branched alkylene group having 1 or more and 10 or less carbon atoms,
Q¹² is a hydrogen atom or a methyl group,
Q¹³ is a trivalent to hexavalent organic group having 1 or more and 10 or less carbon atoms,
a1 is 0 or 1,
a2 is 3 or more and 15 or less, and
a3 is 3, 4, 5, or 6.

8. The curable composition according to claim 1, wherein the second (meth)acrylate does not comprise a cyclic structure.

9. The curable composition according to claim 1, wherein the second (meth)acrylate comprises (meth)acrylate represented by the following formula (1): 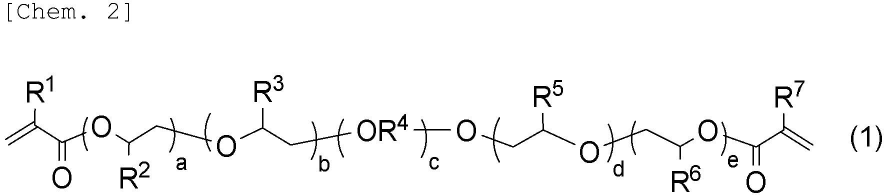 in the formula (1),
R¹ and R⁷ are each independently a hydrogen atom or a methyl group,
R² and R⁶ are each independently a hydrogen atom or an alkyl group having 1 or more and 3 or less carbon atoms,
R³ and R⁵ are each independently a hydrogen atom or an alkyl group having 1 or more and 3 or less carbon atoms,
R⁴ is a linear or branched alkylene group having 3 or more and 10 or less carbon atoms and optionally having a substituent,
a and e are each independently 0 to 10,
b and d are each independently 0 to 20,
c is a number of 2 to 100 and is greater than each of a, b, d, and e.

10. The curable composition according to claim 1, further comprising a third (meth)acrylate having a number average molecular weight of less than 850 and having three or more (meth)acryloyl groups.

11. The curable composition according to claim 10, wherein a proportion of the third (meth)acrylate in the curable composition is 5% by mass or more and 50% by mass or less.

12. The curable composition according to claim 1, further comprising a fourth (meth)acrylate having a number average molecular weight of less than 850 and two (meth)acryloyl groups.

13. The curable composition according to claim 12, wherein a proportion of the fourth (meth)acrylate in the curable composition is 1% by mass or more and 30% by mass or less.

14. A cured body obtained by curing the curable composition according to claim 1.

15. A laminate comprising:
an optical base material; and
a resin layer comprising the cured body according to claim 14.

16. A laminate comprising:
an optical base material;
a primer layer comprising a urethane resin; and
a resin layer comprising the cured body according to claim 14, the resin layer being laminated on the primer layer.

17. An optical article comprising the cured body according to claim 14.

18. A lens comprising the cured body according to claim 14.

19. Glasses comprising the lens according to claim 18.

20. The cured body according to claim 14, wherein a biomass plastic content by a method conforming to ISO standard 16620-3 is 25% by mass or more.

21. The laminate according to claim 15, wherein a biomass plastic content of the optical base material by a method conforming to ISO standard 16620-3 is 25% by mass or more.

22. A photochromic optical article wherein
in measurement by a method according to Japanese Industrial Standard T7333,
the photochromic optical article has a luminous transmittance of 12% or less at a time of color development in an atmosphere at 23°C, and
a difference in the luminous transmittance between 23°C atmosphere and 35°C atmosphere at a time of color development is within 12%, and
time to reach a luminous transmittance of 70% at a time of fading is within 400 seconds.
